(19) Europäisches Patentamt
European Patent Office
Office européen des brevets

(11) Publication number: **0 134 706 B1**

(12) # EUROPEAN PATENT SPECIFICATION

(45) Date of publication of patent specification: **17.07.91** (51) Int. Cl.$^5$: **H01G 9/00**

(21) Application number: **84305362.0**

(22) Date of filing: **07.08.84**

(54) **Electric double layer capacitor and method for producing the same.**

(30) Priority: **08.08.83 JP 143652/83**
**20.08.83 JP 150929/83**
**20.08.83 JP 150930/83**
**30.08.83 JP 157172/83**
**20.09.83 JP 172123/83**

(43) Date of publication of application:
**20.03.85 Bulletin 85/12**

(45) Publication of the grant of the patent:
**17.07.91 Bulletin 91/29**

(84) Designated Contracting States:
**DE FR GB**

(56) References cited:
**EP-A- 0 026 995**
**US-A- 4 014 730**

**CHEMICAL ABSTRACTS, vol. 85, no. 22, 29th November 1976, page 197, no. 163232w, Columbus, Ohio, US; S. OTANI et al.: "Secondary battery composed of carbon fibers and an aqueous solution of salts. Part 1. Relation between the composition and the performance of secondary batteries composed of carbon fibers and an aqueous salt solution", & DENKI KAGAKU OYOBI KOGYO BUTSURI KAGAKU 1976, 44(1), 27-33**

(73) Proprietor: **MATSUSHITA ELECTRIC INDUSTRIAL CO., LTD.**
**1006, Oaza Kadoma**
**Kadoma-shi, Osaka-fu, 571(JP)**

(72) Inventor: **Yoshida, Akihiko**
**2-4-410 Taishibashi-3-chome Asahi-ku**
**Osaka(JP)**
Inventor: **Nishino, Atsushi**
**19-9 Nansuiencho**
**Neyagawa-shi(JP)**
Inventor: **Tanahashi, Ichiro**
**Shoeiryo 30-23 Miyukihigashimachi**
**Neyagawa-shi(JP)**
Inventor: **Takeuchi, Yasuhiro**
**2-18-6, Kuzuha**
**Kirakata-shi(JP)**
Inventor: **Ono, Motoyoshi**
**46-2 Yamadaikehigashimachi**
**Hirakata-shi(JP)**

(74) Representative: **Newens, Leonard Eric et al**
**F.J. CLEVELAND & CO. 40/43 Chancery Lane**
**London WC2A 1JQ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an electric double layer capacitor using polarizable electrodes made of activated carbon fibers and a method for producing the same.

As shown in Fig. 1 of the accompanying drawings, the electric double layer capacitor basically includes a pair of polarizable electrode units formed by activated carbon layers 1 and 2 and collector electrodes 3 and 4, and a separator 5 interposed between the polarizable electrodes. The activated carbon layers 1 and 2 and the separator 5 are impregnated with an electrolyte.

The electric double layer capacitors of this basic construction are roughly divided into the following three types of specific constructions. As shown in Fig. 2, the first type is constructed by applying a mixture 6 of activated charcoal powder and an organic binder such as fluorine resin powder onto aluminum nets 7, coiling the aluminum nets 7 together with separators 8, placing in a metal can 9 and hermetically sealing the can 9 with a rubber sealing cap 10. The coiled assembly is impregnated with an electrolyte composed of an aqueous solution of sulfuric acid or the like, or an organic mixture of tetraethyl ammonium perchlorate and propylene charbonate or the like as mentioned previously, and numerals 11 and 12 designate electrode leads. The second type, shown in Fig. 3, uses viscous paste 13 and 14 prepared by mixing an aqueous electrolyte and activated charcoal powder and it includes an interposed separator 15, insulating rings 16 and 17 and conductive elastic electrodes 18 and 19. With the first and second types using activated charcoal powder as the polarizable electrodes, the former features the high breakdown voltage and the latter features the reduced internal resistance. In addition to these types, the third type is the one (Japanese Laid-Open Patent Application No. 55-99714 Publication No. 60-15138) which is invented by the inventors and employs activated carbon fibers as polarizable electrodes.

In Fig. 4 showing the third type capacitor, activated carbon fiber fabrics 20 and 21 which are respectively formed with metal sprayed coatings 22 and 23 are arranged opposite to each through the intermediary of a separator 24 and are hermetically assembled with a gasket 25 and metal cases 26 and 27. Since this type can be formed into a flat coin shape, is easy to manufacture and is small in size and high in capacitance, the third type is suitable for miniature circuits for the back-up use in microcomputers.

U.S. 4562511 discloses a capacitor which uses an activated carbon fiber for its polarizable electrodes.

Then, with the capacitors of the type using an activated carbon fabric, if the fabric is produced by carbonization and activation processes, the manner of weaving the fibers into the fabric has an important effect on the characteristics of the capacitor having the thus formed fabric. More specifically, the higher the proportion of the fibers entering the inside of the fabric is, the harder it will be for the activation gas (e.g., water vapor, $CO_2$ or HC) to sufficiently penetrate into the surface of the fibers at the inside during the activation, thus impeding the progress of the uniform activation for the fabric as a whole. Therefore, in order to satisfactorily promote the uniform activation of the fabric as a whole, it is impossible to obtain the desired specific surface area per unit weight unless the activation temperature is greatly increased or the activation time is increased. However, if the activation temperature is increased or the activation time is increased, the strength of the resulting activated carbon fabric is heavily decreased thereby rendering the activated fabric unsuitable for use.

It is an object of the present invention to provide an electric double layer capacitor having polarizable electrodes constituted by activated carbon fibers which are fully activated and have a large specific surface area.

According to the present invention there is provided an electric double layer capacitor including a pair of polarizable electrodes wherein each of the polarizable electrodes comprises an element including activated carbon fibers, the carbon fibers include a plurality of micropores of pore size $2 \times 10^{-9}$ m (20Å) or more, characterised in that the electrodes have a ratio of the total geometric surface area of a fabric to the total geometric surface area of secondary fibers of 0.01 or more wherein secondary fibers consist of a collective body of primary fibers.

Here, the term "activated carbon fibers" means one which is in the form of a woven fabric, nonwoven fabric, felt or the like composed of activated carbon fibers.

Accordingly, it is another object of the present invention to provide a method for producing electric double layer capacitors having polarizable electrodes constituted by carbonizing and activating woven fabric, nonwoven fabric, felt or the like which have the surface fiber ratio of 0.01 or more.

The present invention will be apparent from the following detailed description taken in conjunction with the accompanying drawings, in which:

Fig. 1 is a sectional view showing the basic construction of electric double layer capacitors;

Figs. 2, 3, 4 show by way of examples the conventional constructions of electric double layer capacitors;

Fig. 5 is a schematic diagram showing an example of apparatus for subjecting raw fibers to carbonization

and activation processes;

Figs. 6a to 6d are sectional views useful for explaining the surface fiber ratio of woven fabrics;

Fig. 7 is a graph showing the relation between the surface fiber ratio of fabrics and the specific surface area of activated carbon fibers;

Fig. 8 is a graph showing the relation between the surface fiber ratio of fabrics and the strength of the resulting carbon fibers;

Fig. 9 is a graph showing the relation between the surface fiber ratio of fabrics and the capacitance of capacitors having electrodes of fabrics having the indicated ratios;

Figs. 10a to 10d show weaving methods of raw woven fabrics used with the embodiment of the invention;

Figs. 11a to 11c are sectional views showing the relation between the primary and secondary fibers of woven fabrics;

Fig. 12 is a diagram showing the carbonization and activation processes of raw fibers and the relation between the processes;

Fig. 13 is a graph showing the relation between the weight loss of raw fabric during the carbonization and activated processes and the capacitance of the capacitors with the resulting activated carbon fibers;

Fig. 14 is a graph showing the relation between the weight ($g/m^2$) of raw fabric and the capacitance of capacitors with the activated carbon fiber electrodes produced by activating the raw fibers;

Fig. 15 is a graph showing comparatively the relation between the weight loss due to the activation process and the capacitance of capacitors using the resulting electrodes in consideration of temperature factors;

Fig. 16 is a graph showing the relation between the eyelet weight of raw fabric and the capacitance of capacitors with the electrodes made of activated carbon fiber fabric obtained by activating the raw fabric;

Fig. 17 is a graph showing the pore size distribution of activated carbon fibers;

Fig. 18 is a graph showing the capacitance-temperature characteristics of capacitors using the electrodes made of the activated carbon fibers of Fig. 17;

Figs. 19a to 19c are diagrams for comparatively explaining the progress of activation of fabrics with respect to the outer and inner part of the fabrics;

Figs. 20a to 20c are diagrams for explaining the relation between the degree of progress of activation and the shape of pores formed on activated carbon fibers;

Fig. 21 is a graph showing the relation between the activation time and the weight loss caused by activation;

Fig. 22 is a graph showing the effect of a water impregnated activation process;

Fig. 23 is an equivalent circuit diagram of the capacitor;

Figs. 24a and 24b are diagrams for explaining a capacitance lead-out efficiency of the capacitors with the electrodes of a powdered activated carbon and an activated carbon fiber;

Figs. 25a to 25e are diagrams showing some examples of a woven fabric used with the invention;

Fig. 26 is a diagram for explaining the capacitance lead-out efficiency improving effect of the invention;

Figs. 27 and 28 are diagrams showing the principles of activation gas supply apparatus according to the invention;

Fig. 29 is a graph showing the relation between the pressure of supplied vapor gas and the capacitance of capacitors using the electrodes made of activated carbon fibers produced by the activation process at these gas pressures; and

Fig. 30 is a sectional view showing a capacitor according to the embodiment of the invention.

The details of the present invention will now be described with reference to Figs. 5 to 30.

The electric double layer capacitor of the invention is one (e.g., a capacitor of the form shown in Fig. 4) employing polarizable electrodes made of a woven fabric, nonwoven fabric, felt, or the like composed of at least activated carbon fibers as one of its constituent ingredients and more particularly the one in which these polarizable electrodes are high in capacitance value per unit area and unit weight and low in internal resistance.

To accomplish these objects, the invention features the construction (the weaving method, specific weight, etc.), materials and carbonization and activation processes of the polarizable electrodes.

The feature of the activated carbon fiber polarizable electrodes of the invention will now be described in detail in terms of the individual raw materials and production methods.

① Surface fiber ratio and weaving type.

In the case of a capacitor having polarizable electrodes made of an activated carbon fabric such as the

present invention, when a raw fabric is subjected to carbonization and activation processes, the type of weaving of the fibers for forming the fabric governs the various properties of the resulting activated carbon fabric and hence the characteristics of a capacitor having the electrodes. More specifically, the higher the proportion of the fibers entering the inside of a fabric, the harder it will be for an activation gas (e.g., water vapor, $CO_2$ or HC) to satisfactorily enter and contact the surface of the fiber at the inside of the fabric during the activation process, thereby making the uniform progress of the activation difficult on the whole. Thus, in order to ensure a satisfactory progress of the uniform activation of the fabric on the whole, it is impossible to obtain the desired specific surface area per unit weight unless the activation temperature is greatly increased or the activation time is increased. However, if the activation temperature is increased or the activation time is increased, the strength of the resulting activated carbon fabric is heavily decreased and it is not suitable for use.

Fig. 5 shows an example of an apparatus for activating a raw fabric.

A raw fabric 31 accommodated within a furnace 30 is carbonized and activated by being contacted with an activation gas supplied from an activation gas supply unit 33 at a high temperature in the furnace 30 which is controlled by a control unit 32. For example, as regards the construction of raw fibers, where the proportion of fibers 35 positioned at the surface of a fabric 34 is small as compared with the amount of fibers entering the inside of the fabric in the thickness direction thereof as shown in Fig. 6a, during the activation processing, only the activation of the surface of the fabric progresses, while, the progress of the activation of the inside of the fabric is rendered difficult. As a result, even in the case of fabrics having the same fabric weight per unit fabric area (hereinafter referred to as eyelet or unit-area weight ($g/m^2$), if the proportion of fibers 37 exposed to the surface of a fabric 36 is small as shown in Fig. 6b, the activation of the fabric is made difficult.

Thus, the proportion of the fibers exposed to the surface is defined as (total geometric surface area of fabric/total geometric surface area of secondary fibers or strands) and it is referred to as a surface fiber ratio.

The surface fiber ratio is calculated by the following method on the basis of the dimensions shown in Figs. 6c and 6d.

The total geometric surface area of fabric = a x b = $S_1$.

The total geometric surface area $S_2$ of secondary fibers or strands is obtained by the following method.

$$S_2 = \pi c \times \ell$$

where

c: diameter of secondary fibers or strands; and

$\ell$: total length of secondary fibers.

With $Wg/m^2$ representing the weight ($g/m^2$) of the fabric and wg/m representing the weight per unit length of the secondary fiber, the value of $\underline{\ell}$ is calculated from $\ell = W/w(m)$. In this way, the surface fiber ratio =

$$\frac{S_1}{S_2}$$

is obtained.

Fig. 7 shows the relation between the surface fiber ratio (total geometric surface area of fabric/total geometric surface area of secondary fibers or strands) and the specific surface area of the fiber, after it has been activated, with respect to raw fiber fabrics (hereinafter referred to as raw fabrics) comprised of phenol type fiber fabrics having weight ($g/m^2$) of 200 $g/m^2$. In the Figure, the solid line shows the relation achieved by activation for 30 minutes at 800 °C and the broken line shows the relation achieved by activation for 2 hours at 800 °C.

Fig. 8 shows the fiber strength of the activated fabrics (activated carbon fabrics) as a function of the surface fiber ratio of the fabrics.

As will be seen from these results, the activation proceeds more smoothly and uniformly and the fabric strength is also maintained high for the same unit-area weight in proportion to the value of the surface fiber ratio.

In Fig. 9 showing the characteristics of the electric double layer capacitors produced by using the above-mentioned activated carbon fabrics, the abscissa represents the surface fiber ratio and the ordinate represents the capacitance (farad). It shows that the output capacitance increases in proportion to the value

of the surface fiber ratio. The values represent the single-cell capacitances with the electrodes of 5 mm ∅.

In the case of an element made of the activated carbon fibers having a large surface fiber ratio, the element is fully activated uniformly throughout the whole element (particularly in the thickness direction) and thus the capacitance of the activated carbon fibers in the thickness direction of the element is satisfactorily taken out with low resistance to the conductive electrode layer at the surface.

In view of the foregoing background, the present invention requires the use of an activated carbon fabric made by a weaving method which produces a surface fiber ratio of 0.01 or more.

Two methods are available for increasing the surface fiber ratio. The first method has recourse to the selection of a weaving method of the secondary fibers and the second method has recourse to the selection of the primary fibers forming the secondary fibers. While the diameter of the secondary fibers used in the invention is in the range from No. 1 size to No. 40 size, the primary fibers used have a small diameter and the primary fibers are bundled into the secondary fibers thereby increasing the effective fiber area per unit area of the fabric.

Figs. 10a to 10d are schematic diagrams showing various weaving methods of raw fabrics with Fig. 10a showing a plain weave, Fig. 10b a twill weave, Fig. 10c a satin weave and Fig. 10d a basket weave, and these weaves represent the principal ones. With any of these weaving methods, it is possible to preset the surface fiber ratio to 0.01 or more by suitably controlling the thickness of the secondary fibers, the weaving density, etc., and also there is the effect of increasing the strength of the resulting fabrics and ensuring easy handling of the fabrics during the manufacture.

Figs. 11a to 11c show the relation between the primary and secondary fibers and the fabrics with Fig. 11a showing a plain fabric 42 woven by using secondary fibers 41 of 0.5 mm diameter made by bundling primary fibers 40 of 0.2 μm diameter and 100 mm long, Fig. 11b a plain fabric 45 woven by using secondary fibers 44 of 0.5 mm diameter made by bundling primary fibers 43 of 10 μm diameter and 100 mm long and Fig. 10c a plain fabric 47 woven by directly using continuous filaments 46 of 0.5 mm diameter as primary fibers. When these three types of fabrics are subjected to the activation process under the same conditions, the activation gas contacts and reacts with the surface of the fibers in a greater extent in the order of Figs. 11c, 11b and 11a.

② Relation between weight (g/m$^2$) of fabric and capacitance.

This section describes the correlation between the weight loss and shrinkage due to the activation of raw fabrics and the capacitance of electric double layer capacitors using the resulting activated carbon fabrics and also a description is made of the feature of the invention concerning the optimum range of unit-area weights for obtaining the desired capacitance of the capacitor on the basis of the results of the study of the correlation.

Fig. 12 is a flow sheet for the carbonization and activation of a raw fabric, in which numeral 50 designates a raw fabric, 51 a carbon fiber fabric, 52 an activated carbon fiber fabric, A a carbonization and activation process, B a carbonization process and C an activation process.

When a woven or nonwoven raw fabric placed in an activation gas at a high temperature is subjected to carbonization and activation according to the above-mentioned processes, the carbonization process B causes the gasification of the volatile compounds in the raw fabric 50 and the destructive carbonization of the fabric. Activation process C forms small pores in the surface of the carbonized fiber fabric 51 by a reaction of the following equation (1) thereby increasing the specific surface area

$$C_n + 1/2\ O_2 \rightarrow C_{n-1} + CO\uparrow \quad (1)$$

The carbonization and activation process A causes the two processes B and C to proceed simultaneously and continuously. Each of these processes causes a loss of the weight and area of the raw fabric and serves as a measure of the degree of progress of the carbonization and activation reaction. The degree of progress of the carbonization and activation reaction has a significant effect on the characteristics of an electric double layer capacitor in which the fabric is used as its electrodes.

Fig. 13 is a graph showing the relation between the weight loss or area loss caused by carbonization and activation of the fabrics and the capacitance of the capacitor, which shows that the maximum capacitance value (per unit area fabric) is obtained when the weight loss of the raw fabric shown by the curve (a) is from 60% to 90% and the area loss of the raw fabric shown by the curve (b) is from 30% to 70%. Note that the ordinate represents the capacitance ratio (%) with the capacitance value corresponding to the maximum capacitance output per unit area taken as 100.

Fig. 14 shows a characteristic curve of the capacitance of a capacitor using the activated carbon fabrics resulting from the carbonization and activation of raw fabrics, with the abscissa representing "raw fabric weight ($g/m^2$)" and the ordinate representing weight loss value or area loss value corresponding to the capacitance ratio peak of 100% in Fig. 13. This tendency remains the same even if the unit-area weight of the raw fabrics is varied over a wide range.

Fig. 15 shows the relation between the weight loss of the fabrics due to the carbonization and activation and the capacitance of electric double layer capacitors using the fabrics for the electrodes at 25° C and -25° C, respectively.

With these characteristics, the capacitance at 25° C gradually increases with increase in the weight loss due to the activation and the peak is attained at around 60%. On the other hand, the capacitance at -25° C rapidly increases in response to a weight loss of about 70% and thereafter the capacitance varies closely following the curve of the capacitance at 25≦C. The graph shows the values of the capacitors using two electrodes of 10 mm ∅.

Fig. 16 is a graph showing the relation between the weight ($g/m^2$) of raw fabrics and the capacitance of capacitors using the resulting activated carbon fabrics for the electrodes. In the Figure, the capacitances of the capacitors having two electrodes of 10 mm ∅ are shown as in the case of Fig. 15. The capacitance values of this Figure are those obtained by discharge tests at 10 mA. From the Figure it will be seen that a capacitance value of 1.3 F is obtained with the two electrodes of 10 mm ∅ made of the raw fabric having a unit-area weight of 500 $g/m^2$ and this results in the following equation:

$$(500/\{1.3/(2x7.85x10^{-5})\} = (0.06g/m^2)/(F/m^2)$$

Thus, the optimum fabric unit-area weight for obtaining a capacitance value of $1F/m^2$ is 0.06 $g/m^2$. In this example, the discharge current is 10 mA and thus considering the discharge at a greater or smaller current than this value the optimum fabric unit-area weight for obtaining a capacitance value of 1F/($m^2$ of activated carbon fabric) is in the range between 0.002 $g/m^2$ and 0.2 $g/m^2$.

In the case of the woven and nonwoven raw fabrics used with the invention, the suitable range of fabric unit-area weights is from 20 $g/m^2$ to 1000 $g/m^2$. If the unit-area weight of the fabric is less than this range, the fabric is extremely open in weave and it is difficult to maintain the shape of the fabric. On the other hand, if the unit-area weight of the fabric is greater than the range, the finished thickness exceeds 1.5 mm and this is also not preferable from the standpoint of the surface fiber ratio described in the first section.

③ Activation gas supply and method therefor.

A pore size of $2x10^{-9}$m (20 Å) or more of micropores in the activated carbon fiber is necessary for an electric double layer capacitor to function effectively. (The suitable range of values is disclosed for example in the invention of the inventors in Japanese Patent Application No. 58-13456 laid open as JP-A-59-67617, corresponding to EP-A-0112923). While generally the value of the electric double layer capacitance increase with an increase in the specific surface area of the activated carbon, when used for the electrodes of the electric double layer capacitor, even in the case of the activated carbon materials having the same specific surface area of 1500 $m^2/g$, the following differences in characteristics occur between the material in which the greater proportion of the pore distribution includes pore sizes of over $2x10^{-9}$m (20Å) as shown by the curve A and the material in which the greater proportion of the pore distribution includes pore sizes of less than $2x10^{-9}$m (20 Å) as shown by the curve B in the pore distribution diagram of Fig. 17. In other words, in Fig. 18 showing the capacitance-temperature characteristics of the capacitors using the activated carbon materials of Fig. 17, the activated carbon of (A) exhibits sufficiently high capacitance values both at room temperature and at low temperatures, while, the activated carbon of (B) exhibits substantially the same capacitance values as (A) at room temperature but considerably lower capacitance values at low temperatures. This difference in temperature characteristics is caused by the relation between the pore size and the thickness (2 to 3 x $10^{-9}$m (2 to 3 Å)) of the electric double layers.

In view of these circumstances, a suitable activated carbon for the polarizable electrodes of the electric double layer capacitor must meet the essential requirement of having a high specific surface area and including uniformly a large number of pores of a size over $2x10^{-9}$ m (20Å). In the case of the powdered activated carbon used for the polarizable electrodes of the electric double layer capacitors of the previously mentioned first and second types, this essential requirement can be met relatively easily by means of stirring or the like during the manufacture. However, where such activated carbon fabric as used with the invention is used for the polarizable electrodes, it is considerably more difficult to obtain a fabric uniformly having pores of a large pore size.

Figs. 19a to 19c are enlarged views for explaining a pre-activation raw fabric and the progress of activation of the fiber. Fig. 19a shows the raw fabric which is not subjected to the carbonization and activation processes as yet and it is composed of warp threads 55 and woof threads 56 which are made by twisting together fine primary fibers. Generally, the fabric has a thickness of 0.5 to 2 mm. The activation of this fabric with water vapor gives rise to the following problems. The carbonization and activation by the water vapor is given as

$$C_n + H_2O \rightarrow C_{n-1} + CO\uparrow + H_2\uparrow \quad (2)$$

As will be seen from the equation (2), the carbonization and activation process is a reaction in which carbon is attacked by the oxygen atoms of $H_2O$ molecules and the chance for contact between the $H_2O$ molecules and the carbon fibers serves as a rate-determining factor for the rate of the reaction. As a result, if the amount of water vapor is not sufficient, only fibers 58 present at the surface of a fabric 57 are activated and fibers 59 existing within the fabric 57 are not fully activated as shown by the sectional view of the fabric in Fig. 19b. On the other hand, if the activation time is increased but the same amount of water vapor is used, as shown in Fig. 19c, fibers 61 inside a fabric 60 are activated optimally but fibers 62 in the vicinity of the surface are activated excessively.

The following Table 1 shows the characteristics of the electric double layer capacitors constructed by stamping two electrodes of 10 mm ⌀ from activated carbon fabrics corresponding to Figs. 19b and 19c, respectively, and assembling the electrodes, along with separators and electrolyte, into the same form as shown in Fig. 4.

Table 1

| | Activated carbon fabric strength | Characteristics of electric double layer capacitor | | |
|---|---|---|---|---|
| | | Capacitance (25°C) | Capacitance (-25°C) | Resistance |
| Fig. 19b | Strong | 0.8F | 0.1F | 5 Ω |
| Fig. 19c | Weak | 0.5F | 0.48F | 10 Ω |

Figs. 20a to 20c show the manner in which the shape of the pores of the activated carbon undergo changes in response to the progress of activation.

While, in the case of Fig. 19b, the greater portion of the pores formed in the fibers at the fabric surface comprise pores 65 of sizes greater than $2 \times 10^{-9}$m (20 Å) as shown in Fig. 20a, the fibers inside the fabric are not activated fully thus forming only pores 66 as shown in Fig. 20b. Thus, as shown in Table 1, there is the disadvantage of the reduced capacitance at low temperatures although the capacitance at the room temperature has a relatively high value. Also, in the case of Fig. 19c, while the fibers inside the fabric include excellent pores as shown in Fig. 20a, there is the disadvantage that the fibers at the fabric surface are activated excessively so that the diameter of pores 67 becomes excessively large as shown in Fig. 20c and the total area is reduced. There is another disadvantage of greatly decreasing the strength.

As regards the degree or frequency of contact between the activation gas and the fibers to be activated, the previously mentioned "surface fiber ratio" or the weaving method and the weight (g/m$^2$) of the fabric constitute an important governing factor. In addition to these factors, the amount of activation gas and the gas pressure mentioned in this section constitute another important factors.

In accordance with the invention the polarizable electrodes of an electric double layer capacitor are made of an activated carbon fabric prepared by carbonizing and activating a raw fabric with water vapor of 2666 N/m$^2$ (20 mm Hg) or over in a high-temperature inert gas atmosphere. During the activation of the raw fabric with water vapor, the water vapor having a high vapor pressure is supplied so that the absolute water content in the atmosphere is increased and thus the water vapor is introduced in a sufficient amount inside the fabric. Thus, any difference of the degree of progress of the activation reaction in the thickness direction of the fabrics is eliminated and uniform pores are formed throughout the fabric in a short period of time. The method of supplying the activation gas will be described in detail in connection with the description of

examples later.

Another embodiment of the invention incorporating a method of further improving the efficiency of contact between an activation gas and a fabric during the activation will now be described.

This method features that a raw fabric is impregnated with water prior to its activation. This step has great advantages: ① During the activation the impregnated water vaporizes and acts as an activation gas. ② Since the fibers are preliminarily impregnated with water, the wetting properties of the fibers to the water vapor are improved and the contact oxidation reaction with the activation gas is effected smoothly.

Fig. 21 is a characteristic diagram for explaining the effect of the invention and it shows the relation between the activation time and weight loss of a novolac fabric having a size of 10 cm x 10 cm, thickness of 1 mm and eyelet weight of 200 $g/m^2$. The activation temperature is 800 °C and the activation gas is propane combustion gas. In the Figure, the curve A shows the data obtained by activating a fabric preliminarily impregnated with water as the present invention and the curve B shows the data of one activated by the conventional method. As will be seen from the Figure, a weight loss of about 90% takes place in 20 minutes in the case of curve A and curve B shows a similar weight loss as curve A in 40 minutes which is double the time. This means that in accordance with the invention the activation progresses at a rate which is about two times the conventional rate.

Referring to Fig. 22, the solid lines show the relation between the activation time and the weight loss in the cases using the activation method of this invention and the broken lines show the relation in the cases using raw fabrics which were not impregnated with water.

The curves A, B and C respectively correspond to the fabrics having unit-area weights ($g/m^2$) of 100 $g/m^2$, 300 $g/m^2$ and 500 $g/m^2$ respectively and it will be seen that the rate of weight loss by the activation varies from 1.5 to 3 times for the same unit-area weights depending on whether the fabrics were impregnated with water and this effect increases with an increase in the unit-area weight. It is to be noted that the effect of the water impregnation increases in proportion to the impregnation time, although the effect differs depending on the unit-area weight of the raw fabric. Also, by adding for example alkali metal or alkaline earth metal ions to the impregnating water, it is possible to control the size of the pores formed during the activation by virture of the catalytic action of these ions.

④ Reduction of capacitor internal resistance.

Fig. 23 shows an equivalent circuit of an electric double layer capacitor and considering each of the component parts as a small capacitor the internal resistance is conceivable as including (i) a resistance $R_1$ due to the resistance of the conductive electrodes themselves and the contact resistance between the conductive electrodes and the polarizable electrodes, (ii) the internal resistance of a polarizable electrode $R_2$, (iii) an electric double layer capacitance C and (iv) the resistance of an electrolyte $R_3$. In other words, $R_1$ is the resistance due to the aluminum electrodes themselves and the contact between the aluminum electrodes and the activated carbon layers and $R_2$ is the resistance of the activated carbon layers themselves having an effect when taking the capacitance from the respective capacitor elements to the aluminum electrodes.

In the case of a capacitor having polarizable electrodes made of the previously mentioned activated charcoal powder, the activated carbon layers contain acetylene black so that the resistances of the activated carbon layers are low enough and therefore the resistance $R_2$ is very small. On the contrary, with a capacitor of the type using polarizable electrodes made of activated carbon fibers, the resistance $R_2$ is increased as will be mentioned below so that if nothing is done, the internal resistance increases and the capacitor is not suitable for high rate discharge. In other words, while the carbonized non-activated fiber is low in electric resistance, its specific surface area is small and it is not suitable for the polarizable electrode. On the other hand, while the activated carbon fibers subjected to activation have a very great specific surface area of 1000 to 2500 $m^2/g$ and are suitable for the polarizable electrodes, the electric resistance of the fibers themselves is also increased thus increasing the resistance $R_2$. Figs. 24a and 24b are schematic diagrams of these capacitors. In Fig. 24a showing the capacitor using the powdered activated carbon electrodes, conductives acetylene black 71 are present between individual activated carbon particles 70 and the capacitance of a portion 73 remote from an aluminum electrode 72 is satisfactorily taken out due to the electric conductivity of an activated carbon layer 74. On the contrary, with the other type of Fig. 24b using the activated carbon fibers, the electric conductivity of activated carbon fibers 75 themselves is low so that the capacitance of a portion 77 remote from an aluminum electrode 76 is not easily taken out and consequently the apparent capacitance is decreased. To overcome these deficiencies, as for example, a method (Japanese Patent Application No. 57-177938, (Publication No. 63-64890, Corresponding to EP-A-0112923), is conceivable in which carbon particles are carried on the surface of activated carbon fibers and

this method has limitations from the aspects of characteristics and manufacturing method and it leaves room for improvement.

Thus, with a view to reducing the internal resistance of an electric double layer capacitor using polarizable electrodes made of activated carbon fibers, the present invention features the use of the following woven fabrics and nonwoven fabrics for the electrodes. In other words, the present invention comprises an electric double layer capacitor in which structural members such as woven or nonwoven fabrics made of activated carbon fibers and conductive wires are used as polarizable electrodes.

Figs. 25a to 25e schematically show in enlarged form some examples of the polarizable electrode according to the invention. The examples are each composed of conductive wires 80 and activated carbon fibers 81. Fig. 25a shows a plain weave electrode using activated carbon fibers as warp threads and tantalum wires as woof threads. Fig. 25b shows a similar plain weave electrode in which practically almost all the warp and woof threads are activated carbon fibers and tantalum wires are used only partly. This construction also accomplishes the object of the invention. Fig. 25c shows a plain weave electrode in which the warp and woof threads are secondary fibers made by twisting together primary fibers 82 of 2 $\mu$m diameter and tantalum wires 83 of 2 $\mu$m diameter in suitable proportions. Fig. 25d shows an electrode in which tantalum wires and activated carbon fibers are combined into a felt like form and this nonwoven form also meet the purpose of the invention. Fig. 25e shows a three-dimensional weave electrode made of tantalum wires and activated carbon fibers and this three-dimensional weave has the effect of ensuring positive electric contact between the conductive wires and the activated carbon fibers and further improving the effect of the invention.

The following two methods are conceivable for the manufacture of these polarizable electrodes. In other words, the one is to preliminarily blend and weave conductive wires and nonactivated fibers and activate the resulting fabric and the other is to weave conductive wires into an activated fabric. While there are many suitable materials for use as the conductive wires, with the former method metals having melting points higher than the activation temperature, e.g., tantalum, titanium and nichrome are suitable and aluminum, carbon fibers and the like are suitable materials in the case of the latter method.

Fig. 26 shows schematically the effective function of the invention. More specifically, low resistance conductive wires 85 are woven into relatively high-resistance activated carbon fibers 84 so that the current collection of the whole activated carbon fiber layer 86 is improved and hence the delivery of the capacitance to a conductive layer 87 is improved. Thus, as will be described in connection with the description of examples, the internal resistance of the capacitor is decreased and the capacitance value per volume is increased.

Example 1

Novolak fibers (Novolak is a trademark) of 0.4 $\mu$m diameter and 100 mm long are bundled into secondary fibers of 100 $\mu$m and warp and woof threads each including two of the secondary fibers are woven into a plain fabric having a surface fiber ratio of 0.5. The fabric is held in an atmosphere of 800 °C and activated with an activation gas such as water vapor or $CO_2$ for 30 minutes. Then, an aluminum electrode is formed on one side of the fabric by plasma spray process and then disks of 5 mm ∅ diameter are stamped from the fabric. Inserted between the two electrodes thus prepared is a separator. Two electrodes and a separator are impregnated with an electrolyte composed of propylene carbonate, $\gamma$-butyrolactone and tetraethyl ammonium perchlorate and these elements are enclosed by a metal case through a gasket thereby assembling a flat-type capacitor.

Table 2 shows the characteristics of the electric double layer capacitor provided in accordance with the invention. The table also shows the characteristics of two conventional electric double layer capacitors respectively assembled in the same manner by using a plain weave fabric havig a surface fiber ratio of 0.05 and made of the same secondary fibers as the invention and a plain weave fabric (surface fiber ratio = 0.1) made by using warp and woof threads each including two continuous filaments of 100 $\mu$m diameter. The fibers of the conventional capacitors were activated under the same conditions as the invention.

Table 2

| | Fabric used | | | | Electric double layer capacitor characteristics | |
|---|---|---|---|---|---|---|
| | Thickness of primary fiber | Thickness of secondary fiber | Weave | Surface fiber ratio | Capacitance | Resistance |
| Invention | 0.4 µm | 100 µm | Plain weave | 0.5 | 0.2F | 5 Ω |
| Conventional example | 0.4 µm | 100 µm | Plain weave | 0.003 | 0.1F | 20 Ω |
| | 100 µm | - | Plain weave | 0.005 | 0.08F | 15 Ω |

Example

A Kynol raw fabric (Kynol is a registered trademark) having a weight of 200 g/m$^2$ is carbonized by holding it in a combustion waste gas atmosphere of 700° C for 30 minutes. The resulting carbon fiber fabric

is impregnated with a 1% solution of NaOH in water, dried at room temperature for 1 hour, activated for 2 hours in a combustion waste gas furnace of 800 °C and then washed in water and dried. The thus prepared activated carbon fabric has a weight of 100 g/$m^2$ and the weight loss is about 60%. After a conductive carbon paint has been applied to the surface of the activated carbon fabric and dried, disks of 10 mm diameter are stamped from the activated carbon fabric. The two activated carbon fabric disks are impregnated with an electrolyte comprising a mixture of propylene carbonate and 10 wt% of tetraethyl ammonium perchlorate and then assembled, along with a polypropylene separator (12 mm in diameter and 100 $\mu$m in thickness) and a metal case, into a button-type electric double layer capacitor as shown in Fig. 4.

Table 3 shows the characteristics of the electric double layer capacitor obtained according to this example and also shown for comparison purposes are the characteristics of a capacitor using an activated carbon fabric whose weight loss or decrease on activation is 10% and a capacitor using an activated carbon fabric with a weight loss or decrease of 95%.

Table 3

| | | Activated carbon fabric strength | Electric double layer capacitor characteristics | | |
|---|---|---|---|---|---|
| | | | Capacitance (at 25°C) | Capacitance (at -20°C) | Resistance |
| Invention | | Strong | 0.8F | 0.8F | 3 Ω |
| Conventional example | Activation weight loss-10% | Strong | 0.3F | 0.1F | 3 Ω |
| | Activation weight loss-95% | Fragile | 0.7F | 0.7F | 5 Ω |

The activated carbon fabric used with the invention can be used with electrolytes of aqueous solution type and a case where sulfuric acid is used as the electrolyte will now be described by way of example.

Example 3

A Kynol raw fabric (Kynol is a registered trademark) having a weight of 200 g/$m^2$ is carbonized by holding it in a combustion waste gas atmosphere of 700 °C for 30 minutes. The resulting carbon fabric is impregnated with a 1% aqueous solution of NaOH, dried for 1 hour at room temperature, activated for 2 hours in a combustion waste gas furnace at 800 °C and washed in water and dried. The thus prepared activated carbon fabric has a weight of 100 g/$m^2$ and the weight loss is about 60%.

The surface of the activated carbon fabric is coated with a conductive carbon paint and dried after which the activated carbon fabric is stamped into disks of 10 mm diameter. The two activated carbon fabric disks are impregnated with an electrolyte composed of an aqueous solution of sulfuric acid and then assembled, along with a polypropylene separator (12 mm in diameter and 100 $\mu$m in thickness) and a corrosion-resisting metal case, into a button-type electric double layer capacitor as shown in Fig. 4.

Table 4 shows the characteristics of the electric double layer capacitor obtained in accordance with this example and also shown for comparison are the characteristics of a capacitor using an activated carbon fabric whose weight loss due to activation is 10% and a capacitor using an activated carbon fabric with a weight loss of 95%.

Table 4

| | | Activated carbon fabric strength | Electric double layer capacitor characteristics | | |
|---|---|---|---|---|---|
| | | | Capacitance (at 25°C) | Capacitance (at -20°C) | Resistance |
| Invention | | Strong | 5F | 5F | 0.1 Ω |
| Conventional example | Activation weight loss-10% | Strong | 3F | 0.2F | 0.1 Ω |
| | Activation weight loss-95% | Fragile | 4F | 4F | 0.1 Ω |

Example 4

Fig. 27 shows an example of a water vapor supply method used with the present invention. In order to supply water vapor, a gas supplied from an inert gas bomb 90, e.g., nitrogen or argon is passed and

bubbled through a bottle 92 in a holding tank 91 so that the gas is contacted with water 93 in the bottle 92 and bubbles are formed. If the temperature of the holding tank 91 is held at 50° C, the inert gas having a partial water vapor pressure of about 12263.6 N/$m^2$ (92 mm Hg) is supplied into a furnace proper 94. A Kynol raw fabric 95 having a weight of 200 g/$m^2$ is held at 800° C far 10 minutes thereby completing the activation in the furnace 94.

Example 5

Fig. 28 shows another example of the water vapor supply method used with the invention. The supply of water vapor is accomplished by means of a liquid vaporizing apparatus 100 basically comprising water 97 contained in a closed vessel 96, a porous absorber 98 composed of a glassfiber fabric or the like and disposed to partly contact with the water 97 and a heater 99 in partial contact with the porous absorber 98. A gas from an inert gas bomb 90, e.g., argon or nitrogen is introduced into the liquid vaporizing apparatus 100 through an inlet 101 so that water vapor is produced by the vaporizing action of the porous absorber 98 and the heater 99 and, using the insert gas as a carrier, the water vapor is supplied through an outlet 102 into a furnace proper 103 containing a Kynol raw fabric (Kynol is a registered trademark) having a weight of 200 g/$m^2$. Numeral 105 designates an electric power controller for the heater 99 and this power control makes it possible to accurately control as desired the vapor supply per unit time. In this example, the fabric is activated at 800° C for 10 minutes with an inert gas flow of 5 ℓ/min and a heater power of 0.1 kW.

Both of the two different vapor supply methods are capable of supplying a large amount of water vapor and thereby accomplishing the optimum activation in a short period of time. While the effect of the invention is enhanced with an increase in the vapor pressure, the value of the optimum vapor pressure differs depending on the amount of input Kynol fabric, (Kynol is a registered trademark) activation temperature and time and so on.

Fig. 29 shows the correlation between the vapor pressures of the supplied vapor and the capacitance characteristics of an electric double layer capacitor using activated carbon fabrics made using the different vapor pressures. The electric double layer capacitors are made by the same method as the examples of the invention. In the Figure, curve A shows the capacitance values at room temperature and curve B shows the capacitance values at -25° C. It will be seen from the Figure that a supply of vapor higher than 2666 N/$m^2$ (20 mm Hg) ensures a satisfactory room temperature capacitance and that vapor pressure lower than this value result in capacitance values close to zero. While increasing the activation time and effecting the activation with a vapor pressure of 2666 N/$m^2$ (20 mm Hg) or less has the effect of slightly increasing the capacitance value, this is not practical. Also, the low temperature capacitance varies greatly at around 13330 N/$m^2$ (100 mm Hg). While a vapor pressure of 100 mm Hg or more is necessary from the practical point of view, a vapor pressure in a range of 2666 to 13330 N/$m^2$ (20 to 100 mm Hg) is sufficient if only the room temperature capacitance is required. Also, of the two vapor supply methods shown in the examples 4 and 5, the example 5 can control the amount of vapor production irrespective of the temperature of the atmosphere and it is the effective one more suited to the purpose of the invention.

Table 5 shows the characteristics of electric double layer capacitors produced by using activated carbon fabrics prepared by the methods of the examples 4 and 5. The electric double layer capacitors are made by the following method.

The surface of an activated carbon fabric prepared by the previously mentioned activation is coated with an aluminum layer by a plasma spraying process and the thus formed activated carbon fabric with an A1 layer is stamped into disks of 10 mm ∅. The two disk electrodes and a polypropylene separator of 100 mm thick are assembled into a coin type cell as shown in Fig. 4. The electrolyte used is a mixture of propylene carbonate and tetraethyl ammonium perchlorate. The table also shows for comparison the characteristics of a capacitor produced by using a vapor generator effecting the bubbling at 20° C to supply the water vapor for the activation and an activation time of 30 minutes.

Table 5

| | Capacitance (25°C) | Capacitance (-25°C) | Internal resistance |
|---|---|---|---|
| Example 4 | 0.8F | 0.8F | 5 Ω |
| Example 5 | 1.0F | 1.0F | 5 Ω |
| Conventional example | 0.8F | 0.1F | 5 Ω |

Example 6

Fabrics Ⓐ and Ⓑ made of navolak phenol fibers (Novolak is a trademark) and respectively having weights of 100 g/m$^2$ and 500 g/m$^2$ are immersed in a distilled water for 10 minutes. After taking out from the water and subjecting to air drying for 5 minutes, the fabrics are held in a furnace for 10 minutes at 800° C. During the interval, nitrogen gas containing (a) propane combustion gas or (b) water vapor of 3999 N/m$^2$ (30 mm Hg) is introduced into the furnace. After the completion of the activation, a plasma sprayed coating of aluminum is formed on one surface of each of the fabrics and the fabrics are stamped into disks of 10 mm diameter. As shown in Fig. 4, coin-type capacitors are assembled each using two of the fabric disks, a separator, an electrolyte comprising a mixture of propylene carbonate and tetraethyl ammonium perchlorate and a case. Table 6 shows the characteristics of the capacitors according to this example. The table also shows the characteristics of capacitors having activated carbon fibers prepared by the conventional methods which are the same as the present example, except that the step of impregnating the fabric with water prior to the activation is eliminated.

Table 6

| | | | Capacitance | | Resis-tance | Activated carbon fabric strength |
|---|---|---|---|---|---|---|
| | | | at 25°C | at -40°C | | |
| Inven-tion | Ⓐ Weight ($g/m^2$) 100 $g/m^2$ | ⓐ Propane combustion gas activation | 0.4F | 0.4F | 3 Ω | Strong |
| | | ⓑ Water vapor activation | 0.4F | 0.4F | 3 Ω | Ditto |
| | Ⓑ Weight ($g/m^2$) 500 $g/m^2$ | ⓐ Propane combustion gas activation | 1.7F | 1.7F | 5 Ω | Ditto |
| | | ⓑ Water vapor activation | 1.7F | 1.7F | 5 Ω | Ditto |
| Conven-tional example | Ⓐ Weight ($g/m^2$) 100 $g/m^2$ | ⓐ Propane combustion gas activation | 0.3F | 0.05F | 3 Ω | Ditto |
| | | ⓑ Water vapor activation | 0.3F | 0.05F | 3 Ω | Ditto |
| | Ⓑ Weight ($g/m^2$) 500 $g/m^2$ | ⓐ Propane combustion gas activation | 1.0F | 0.1F | 5 Ω | Ditto |
| | | ⓑ Water vapor activation | 1.0F | 0.1F | 5 Ω | Ditto |

- Cont'd -

Table 6 (Cont'd)

| | | | | | |
|---|---|---|---|---|---|
| Conventional example (cont'd) | Weight ($g/m^2$) 500 $g/m^2$ 1-hour $H_2O$ activation | 1.2F | 0.6F | 10 Ω | Weak |
| | Weight ($g/m^2$) 500 $g/m^2$ 2-hour $H_2O$ activation | 1.5F | 1.3F | 10 Ω | Very weak |

Example 7

A fabric made of novolak phenol fibers (Novolak is a trademark) and having a weight of 500 $g/m^2$ is immersed in an aqueous solution of 1 wt% calcium nitrate. After taking out from the solution and subjecting

to air drying for 10 minutes, the fabric is held in a furnace for 30 minutes at 800°C. During this interval, propane combustion gas is introduced into the furnace. After the completion of the activation, the fabric is washed in water for 10 minutes, dried, coated by a plasma sprayed aluminum layer on one surface thereof and then stamped into disks of 10 mm ø. As shown in Fig. 4, a coin-type capacitor is assembled by using two of the thus prepared fabric electrodes, a separator, an electrolyte comprising an aqueous solution of 10 wt% sulfuric acid and a case. Table 7 shows the characteristics of the capacitor according to this example and the table also shows the characteristics of capacitors using activated carbon fabrics prepared by the conventional method which is the same as the present example except that the step of immersing the fabric in the calcium nitrate aqueous solution prior to the activation is eliminated.

Table 7

| | | Capacitance at 25°C | Capacitance at -40°C | Resistance | Activated carbon fabric strength |
|---|---|---|---|---|---|
| Invention | | 3F | 3F | 0.1 Ω | Strong |
| Conventional example | Activation time 30 min. | 1.2F | 0.8F | 0.2 Ω | Strong |
| | Activation time 1 hour | 1.3F | 0.8F | 0.2 Ω | Very weak |

Example 8

A plain fabric is made by using woof threads comprising secondary fibers of 500 μm diameter made by twisting together Kynol fibers (Kynol is a registered trademark) of 4 μm diameter and warp threads

comprising tantalum wires of 500 μm diameter. The fabric is then activated by holding it in a propane combustion gas at 850° C. An aluminum layer of 100 μm thick is formed on one surface of the fabric by the plasma spray process and the fabric is stamped into disks of 10 mm diameter. As shown in Fig. 4, a flat-type capacitor is assembled by using two of the disk electrodes, a polypropylene separator (100 μm in thickness) and an electrolyte comprising propylene carbonate and tetraethyl ammonium perchlorate.

Example 9

Secondary fibers of 500 μm diameter are made by twisting together Kynol fibers (Kynol is a registered trademark) of 4 μm diameter and titanium wires of 10 μm diameter. These fibers are used as warp and woof threads and woven by a twill weave. The resulting fabric is then activated by holding it in a propane combustion gas at 850° C. An aluminum electrode layer of 100 μm thick is formed on one surface of the fabric by the plasma spraying process and then a capacitor is assembled in the same manner as the example 8.

Example 10

The same stranded wires of 500 μm diameter as used in example 9 and titanium wires of 500 μm diameter are woven in a three-dimensional manner as shown in Fig. 25e and a fabric is formed. The fabric is activated in a propane combustion gas at 850° C and a titanium electrode layer of 100 μm thick is formed on one surface of the fabric by the plasma spraying process. A capacitor is assembled in the same manner as in example 8.

Example 11

A fabric made of Kynol continuous filaments (Kynol is a registered trademark) of 500 μm diameter is activated in a propane combustion gas at 850° C. Aluminum wires of 300 μm diameter are woven into the activated carbon fabric and a plasma sprayed layer of aluminum is formed on one surface of the fabric. A capacitor is assembled by using two disk electrodes of 10 mm diameter stamped from the fabric, a separator and an electrolyte.

Another example of the invention employing an aqueous solution of sulfuric acid as an electrolyte will now be described.

Example 12

Titanium wires of 10 μm diameter and Kynol fibers (Kynol is a registered trademark) of 4 μm diameter are blended and continuous filaments of 500 μm diamter are made. These continuous filaments are used as warp and woof threads and woven into a plain fabric. After activating the fabric in a propane combustion gas at 850° C, a titanium layer is formed on one surface of the fabric by the plasma spraying process. The fabric is then cut into strips of 3 cm x 10 cm and an electric double layer capacitor is made by assembling two strip electrodes 106 and 107, a polypropylene separator 108 and a sulfuric acid aqueous solution 109 of 0.1 mol/ℓ into a case 110. Numerals 111 and 112 designate sprayed titanium layers from which leads 113 and 114 are respectively brought out.

Table 8 shows the characteristics of the electric double layer capacitors according to the foregoing five examples. The table also shows the characteristics of electric double layer capacitors of conventional constructions corresponding to these examples.

Although not described in connection with the examples, the satin and basket weavings of fabrics are also effective. Further, carbon paste layers may be used in place of the sprayed layers as the conductive electrodes.

Table 8

| | | Capacitance, 10 mA discharge | Internal resistance | Leakage current |
|---|---|---|---|---|
| Invention | Example 8 | 1.5F | 0.8 Ω | 50 µA |
| | Example 9 | 1.5F | 0.8 Ω | 50 µA |
| | Example 10 | 1.5F | 0.8 Ω | 50 µA |
| | Example 11 | 1.5F | 0.8 Ω | 50 µA |
| | Example 12 | 50F | 0.01 Ω | 50 µA |
| Conventional example | Coin type of 10 mm diameter corre. to examples 8-11 | 1F | 5 Ω | 50 µA |
| | Corre. to example 12, electrodes of 3 x 10 cm & $H_2SO_4$ electrolyte | 35F | 0.1 Ω | 100 µA |

## Claims

1. An electric double layer capacitor including a pair of polarizable electrodes wherein each of the polarizable electrodes comprises an element including activated carbon fibers in the form of a fabric,

the carbon fibers having a plurality of micropores of bore size 2 x $10^{-9}$ m (20Å) or more, characterised in that the electrodes have a ratio of the total geometric surface area of the fabric to the total geometric surface area of secondary fibers of 0.01 or more, wherein secondary fibers consist of a collective body of primary fibers.

**2.** A capacitor according to claim 1, wherein said element including activated carbon fibers comprises a material selected from the group consisting of a woven fabric, non-woven fabric and felt, each thereof composed of activated carbon fibers and conductive wires.

**3.** A capacitor according to claim 1, wherein said element including activated carbon fibers comprises a woven fabric made by weaving the activated carbon fibers together with conductive wires by a type of weaving selected from the group consisting of a plain weave, basket weave, satin weave, twill weave, three-dimensional weave or any combination thereof.

**4.** A capacitor according to claim 1, wherein said activated carbon fibers are made of a material selected from the group consisting of phenol type, rayon type, pitch type and PAN type fibers.

**5.** A method of making an electric double layer capacitor including a pair of polarizable electrodes (20, 21) wherein each of said polarizable electrodes is made through a process of carbonizing and activating a woven fabric, non-woven fabric or felt characterised in that said woven fabric, said non-woven fabric or said felt have a ratio of the total geometric surface area of fabric to the total geometric surface area of secondary fibers of 0.01 or more wherein said secondary fibers consist of a collective body of primary fibers.

**6.** A method according to claim 5, wherein said secondary fibers are bundled primary fibers said primary fibers having diameter of 20 $\mu$m or less.

**7.** A method according to claim 6, wherein said secondary fibers are twisted primary fibers said primary fibers having a diameter of 20 $\mu$m or less.

**8.** A method according to claim 5, wherein said woven fabric, non-woven fabric or felt has a weight (g/$m^2$) of from 20 g/$m^2$ to 1000 g/$m^2$.

**9.** A method according to claim 5, wherein said fiber is made of a material selected from the group consisting of phenol type, rayon type, pitch type and PAN type fibers.

**10.** A method according to claim 5, wherein said woven fabric, non-woven fabric or felt has a weight (g/$m^2$) of from 0.002A(g/$m^2$) to 0.2A(g/$m^2$) where A represents the desired capacitance of activated carbon element and has units of farads /$m^2$.

**11.** A method according to claim 5, wherein said woven fabric, non-woven fabric or felt consists of an element made of a suitable combination of conductive wires and one of phenol type, rayon type, pitch type and PAN type fibers.

**12.** A method according to claim 11, wherein said conductive wires are made of a material having a melting point higher than the carbonization and activation temperature of said element.

**13.** A method according to claim 11, wherein said conductive wires are made of a material selected from the group consisting of tantalum, titanium, nichrome and an alloy thereof.

**14.** A method according to claim 5, wherein said carbonization and activation process is effected in an atmosphere (94, 103) including at least nitrogen and water vapor.

**15.** A method according to claim 5, wherein said carbonization and activation process is effected in an inert gas atmosphere (94, 103) by supplying thereto water vapor of 2666 N/$m^2$ (20 mm Hg) or more.

**16.** A method according to claim 5, wherein said carbonization and activation process is effected in an inert gas atmosphere (94, 103) by supplying thereto water vapor of 13330 N/$m^2$ (100 mm Hg) or more.

17. A method according to claim 5, wherein said carbonization and activation process is effected under the condition of a temperature of 800 °C or more.

18. A method according to claim 14, wherein said water vapor supply is effected by liquid vaporizing means (100) basically comprising water (97), absorbing means (98) disposed to contact with said water (97), and heating means (99) disposed on said absorbing means (98).

19. A method according to claim 5, wherein said element comprising a woven fabric, non-woven fabric, felt is impregnated with water prior to the activation.

20. A method according to claim 19, wherein said water contains ions of at least one of the alkaline metal or alkaline earth metal.

**Revendications**

1. Condensateur électrique à double couche contenant une paire d'électrodes polarisables, dans lequel chacune des électrodes polarisables comprend un élément contenant des fibres de carbone active sous la forme d'un tissu, les fibres de carbone présentant une multiplicité de micropores de 2 x $10^{-9}$ m (20 Å) de calibre ou plus, caractérisé en ce que les électrodes sont telles que le rapport de la surface géométrique totale du tissu à la surface géométrique totale de fibres secondaires est de 0,01 ou plus, les fibres secondaires étant constituées par un ensemble groupé de fibres primaires.

2. Condensateur selon la revendication 1, dans lequel ledit élément contenant des fibres de carbone activé est fait d'un matériau choisi dans le groupe constitué par un tissu, un non-tissé et un feutre, chacun d'eux étant composé de fibres de carbone activé et de fils métalliques conducteurs.

3. Condensateur selon la revendication 1, dans lequel ledit élément contenant des fibres de carbone activé est fait qu'un tissu fabriqué en tissant les fibres de carbone activé avec les fils métalliques conducteurs par un type de tissage choisi dans le groupe constitué par le tissage à armure unie, à armure Panama, à armure satin, à armure sergée, à armure tridimensionnelle ou par toute combinaison de ces armures.

4. Condensateur selon la revendication 1, dans lequel lesdites fibres de carbone activé sont faites d'un matériau choisi dans le groupe constitué par les fibres du type phénol, du type rayonne, du type brai et du type PAN (polyacrylonitrile).

5. Procédé de fabrication d'un condensateur électrique à double couche contenant une paire d'électrodes polarisables (20, 21), chacune desdites électrodes polarisables étant formée par un traitement de carbonisation et d'activation d'un tissu, d'un nontissé ou d'un feutre, caractérisé en ce que ledit tissu, ledit non-tissé ou ledit feutre est tel que le rapport de la surface géometrique totale du tissu à la surface géométrique totale de fibres secondaires est de 0,01 ou plus, lesdites fibres secondaires étant constituées par un ensemble groupé de fibres primaires.

6. Procédé selon la revendication 5, dans lequel lesdites fibres secondaires sont des fibres primaires réunies en faisceau, lesdites fibres primaires ayant un diamètre de 20 $\mu$m ou moins.

7. Procédé selon la revendication 6, dans lequel lesdites fibres secondaires sont des fibres primaires retordues, lesdites fibres primaires ayant un diamètre de 20 $\mu$m ou moins.

8. Procédé selon la revendication 5, dans lequel ledit tissu, non-tissé ou feutre a un poids (g/$m^2$) de 20 g/$m^2$ à 1000 g/$m^2$.

9. Procédé selon la revendication 5, dans lequel lesdites fibres sont faites d'un matériau choisi dans le groupe constitué par les fibres du type phénol, du type rayonne, du type brai et du type PAN (polyacrylonitrile).

10. Procédé selon la revendication 5, dans lequel ledit tissu, non-tissé ou feutre a un poids (g/$m^2$) de 0,002A(g/$m^2$) à 0,2A(g/$m^2$), A représentant la capacité désirée de l'élément de carbone activé et étant

exprimé en farads/$m^2$.

11. Procédé selon la revendication 5, dans lequel ledit tissu, non-tissé ou feutre est constitué par un élément fait d'une combinaison appropriée de fils métalliques conducteurs et de fibres de l'un des types choisis parmi le type phénol, le type rayonne, le type brai et le type PAN.

12. Procédé selon la revendication 11, dans lequel lesdits fils métalliques conducteurs sont faits d'un matériau ayant un point de fusion supérieur à la température de carbonisation et d'activation dudit élément.

13. Procédé selon la revendication 11, dans lequel lesdits fils métalliques conducteurs sont faits d'un matériau choisi dans le groupe constitué par le tantale, le titane, le nichrome et un alliage de ces matériaux.

14. Procédé selon la revendication 5, dans lequel ledit traitement de carbonisation et d'activation est conduit dans une atmosphère (94, 103) contenant au moins de l'azote et de la vapeur d'eau.

15. Procédé selon la revendication 5, dans lequel ledit traitement de carbonisation et d'activation est conduit dans une atmosphère de gaz inerte (94, 103) par apport à celle-ci de vapeur d'eau sous 2666 N/$m^2$ (20 mm Hg) ou plus.

16. Procédé selon la revendication 5, dans lequel ledit traitement de carbonisation et d'activation est conduit dans une atmosphère de gaz inerte (94, 103) par apport à celle-ci de vapeur d'eau sous 13 330 N/$m^2$ (100 mm Hg) ou plus.

17. Procédé selon la revendication 5, dans lequel ledit traitement de carbonisation et d'activation est conduit dans des conditions de température de 800 °C ou plus.

18. Procédé selon la revendication 14, dans lequel ledit apport de vapeur d'eau est effectué par des moyens de vaporisation de liquide(100) comprenant essentiellement de l'eau (97), des moyens absorbants (98) disposés au contact de ladite eau (97) et des moyens de chauffage (99) disposés sur lesdits moyens absorbants (98).

19. Procédé selon la revendication 5, dans lequel ledit élément constitué par un tissu, un non-tissé ou un feutre est imprégné d'eau avant l'activation.

20. Procédé selon la revendication 19, dans lequel ladite eau contient des ions d'au moins l'un des métaux alcalins ou alcalino-terreux.

## Patentansprüche

1. Elektrischer Doppelschichtkondensator, enthaltend ein Paar von polarisierbaren Elektroden, bei dem jede der polarisierbaren Elektroden ein aktivierte Kohlefasern in Form eines textilen Flächengebildes enthaltendes Element aufweist, wobei die Kohlefasern eine Vielzahl von Mikroporen einer Hohlraumgröße von $2 \times 10^{-9}$ m (20 Å) oder mehr haben, **dadurch gekennzeichnet,** daß die Elektroden ein Verhältnis der gesamten geometrischen Oberflächengröße des textilen Flächengebildes zur gesamten geometrischen Oberflächengröße von Sekundärfasern von 0,01 oder mehr haben, wobei die Sekundärfasern aus einem kollektiven Körper von Primärfasern bestehen.

2. Kondensator nach Anspruch 1, bei dem das aktivierte Kohlefasern enthaltende Element ein Material enthält, das aus der Gruppe bestehend aus gewebtem textilen Flächengebilde, nicht-gewebtem textilen Flächengebilde und Filz ausgewählt ist, von denen jedes aus aktivierten Kohlefasern und leitenden Drähten zusammengesetzt ist.

3. Kondensator nach Anspruch 1, bei dem das aktivierte Kohlefasern enthaltende Element ein gewebtes textiles Flächengebilde enthält, das durch Verweben der aktivierten Kohlefasern mit leitenden Drähten hergestellt ist mittels einer Webart, die ausgewählt ist aus der Gruppe bestehend aus ungeköperter Webung, Korbwebung, Satinwebung, Koperwebung, dreidimensionaler Webung oder einer beliebigen

Kombination davon.

4. Kondensator nach Anspruch 1, bei dem die aktivierten Kohlefasern aus einem Material hergestellt sind, das ausgewählt ist aus der Gruppe bestehend aus phenolartigen, kunstseideartigen, pechartigen und PAN-artigen Fasern.

5. Verfahren zum Herstellen eines elektrischen Doppelschichtkondensators, der ein Paar von polarisierbaren Elektroden (20, 21) enthält, bei dem jede der polarisierbaren Elektroden hergestellt wird durch einen Prozess des Karbonisierens und Aktivierens eines gewebten textilen Flächengebildes, nichtgewebten textilen Flächengebildes oder Filzes, **dadurch gekennzeichnet,** daß das gewebte textile Flächengebilde, das nicht-gewebte textile Flächengebilde oder der Filz ein Verhältnis der gesamten geometrischen Oberflächengröße des textilen Flächengebildes zur gesamten geometrischen Oberflächengröße von Sekundärfasern von 0,01 oder mehr hat, wobei die Sekundärfasern aus einem kollektiven Körper von Primärfasern bestehen.

6. Verfahren nach Anspruch 5, bei dem die Sekundärfasern gebündelte Primärfasern sind, wobei die Primärfasern einen Durchmesser von 20 $\mu$m oder weniger haben.

7. Verfahren nach Anspruch 6, bei dem die Sekundärfasern gedrehte Primärfasern sind, wobei die Primärfasern einen Durchmesser von 20 $\mu$m oder weniger haben.

8. Verfahren nach Anspruch 5, bei dem das gewebte textile Flächengebilde, das nicht-gewebte textile Flächengebilde oder der Filz ein Gewicht (g/m$^2$) von 20 g/m$^2$ bis 1000 g/m$^2$ hat.

9. Verfahren nach Anspruch 5, bei dem die Faser aus einem Material hergestellt wird, das ausgewählt ist aus der Gruppe bestehend aus phenolartigen, kunstseideartigen, pechartigen und PAN-artigen Fasern.

10. Verfahren nach Anspruch 5, bei dem das gewebte textile Flächengebilde, das nicht-gewebte textile Flächengebilde oder der Filz ein Gewicht (g/m$^2$) von 0,002A (g/m$^2$) bis 0,2A (g/m$^2$) hat, wobei A die gewünschte Kapazität des aktivierten Kohleelements bedeutet und die Einheit Farad/m$^2$ hat.

11. Verfahren nach Anspruch 5, bei dem das gewebte textile Flächengebilde, das nicht-gewebte textile Flächengebilde oder der Filz aus einem Element besteht, das aus einer geeigneten Kombination von leitenden Drähten und einer von phenolartigen, kunstseideartigen, pechartigen und PAN-artigen Fasern hergestellt ist.

12. Verfahren nach Anspruch 11, bei dem die leitenden Drähte aus einem Material mit einem Schmelzpunkt, der höher ist als die Karbonisierungs- und Aktivierungstemperatur des Elements hergestellt sind.

13. Verfahren nach Anspruch 11, bei dem die leitenden Drähte aus einem Material hergestellt sind, das ausgewählt ist aus der Gruppe bestehend aus Tantal, Titan, Nichrom und einer Legierung davon.

14. Verfahren nach Anspruch 5, bei dem der Karbonisierungs- und Aktivierungsprozess in einer Atmosphäre (94, 103) ausgeführt wird, die zumindest Stickstoff und Wasserdampf enthält.

15. Verfahren nach Anspruch 5, bei dem der Karbonisierungs- und Aktivierungsprozess ausgeführt wird in einer Inertgasatmosphäre (94, 103) unter Zuführung von Wasserdampf von 2666 N/m$^2$ (20 mm Hg) oder mehr.

16. Verfahren nach Anspruch 5, bei dem der Karbonisierungs- und Aktivierungsprozess ausgeführt wird in einer Inertgasatmosphäre (94, 103) unter Zuführung von Wasserdampf von 13330 N/m$^2$ (100 mm Hg) oder mehr.

17. Verfahren nach Anspruch 5, bei dem der Karbonisierungs- und Aktivierungsprozess ausgeführt wird unter der Bedingung einer Temperatur von 800$^\circ$ C oder mehr.

18. Verfahren nach Anspruch 14, bei dem die Wasserdampfzuführung durch eine Flüssigkeitsverdampfungseinrichtung (100) erfolgt, die im wesentlichen Wasser (97), eine absorbierende Einrichtung (98),

die so angeordnet ist, daß sie mit dem Wasser (97) in Kontakt steht, und eine an der absorbierenden Einrichtung (98) angeordnete Heizeinrichtung (99) enthält.

**19.** Verfahren nach Anspruch 5, bei dem das ein gewebtes textiles Flächengebilde, ein nicht-gewebtes textiles Flächengebilde oder einen Filz enthaltende Element vor der Aktivierung mit Wasser imprägniert wird.

**20.** Verfahren nach Anspruch 19, bei dem das Wasser Ionen von mindestens einem der Alkalimetalle oder Erdalkalimetalle enthält.

FIG. 1

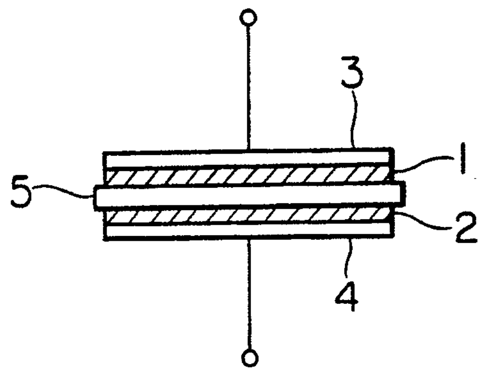


FIG. 2

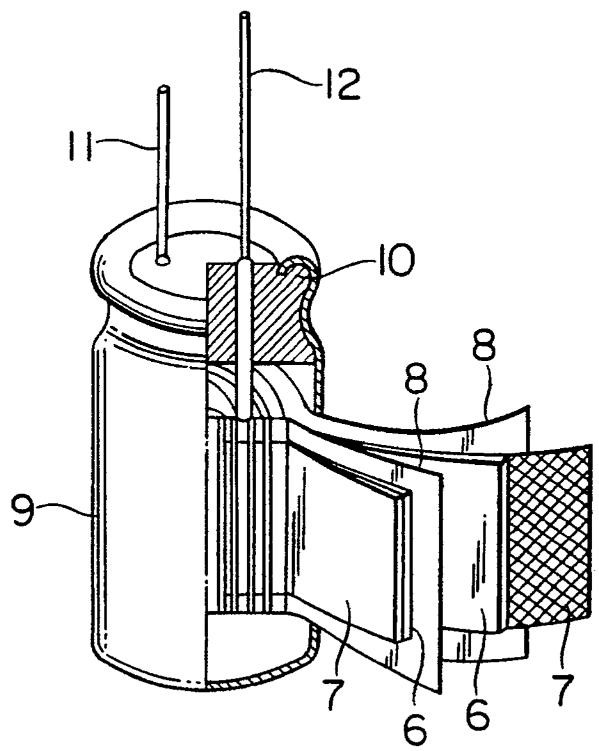

FIG. 3

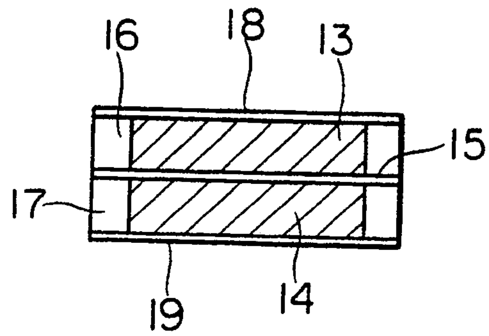


FIG. 4

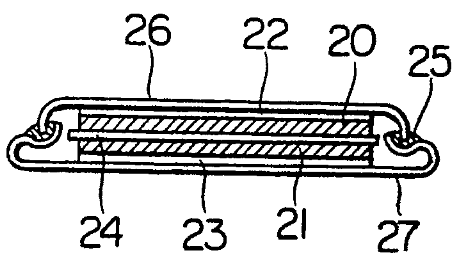


FIG. 5

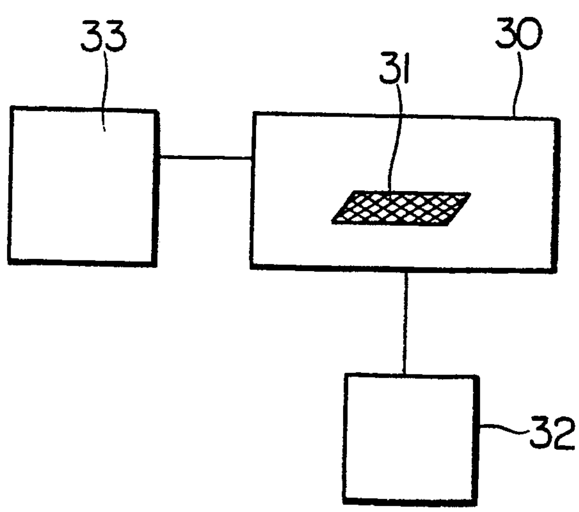

FIG. 6a

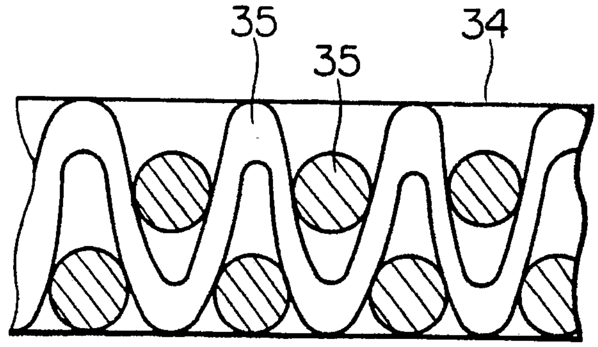


FIG. 6b

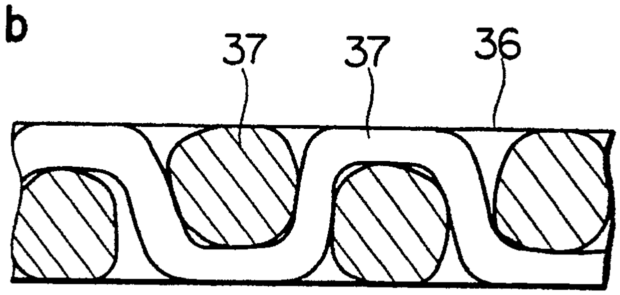


FIG.7

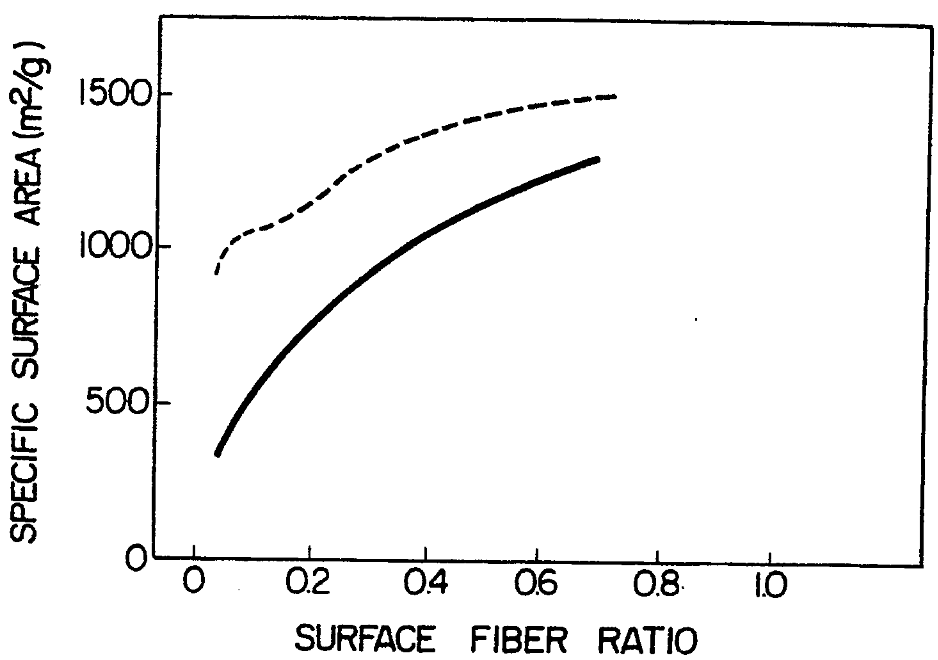

FIG. 6c

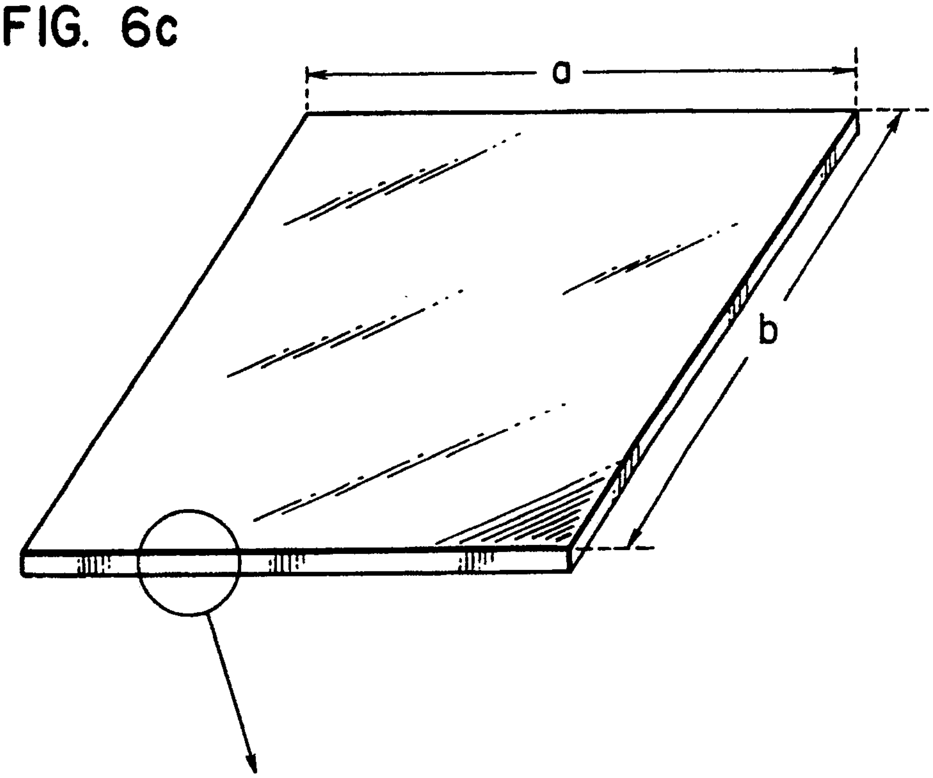


FIG. 6d

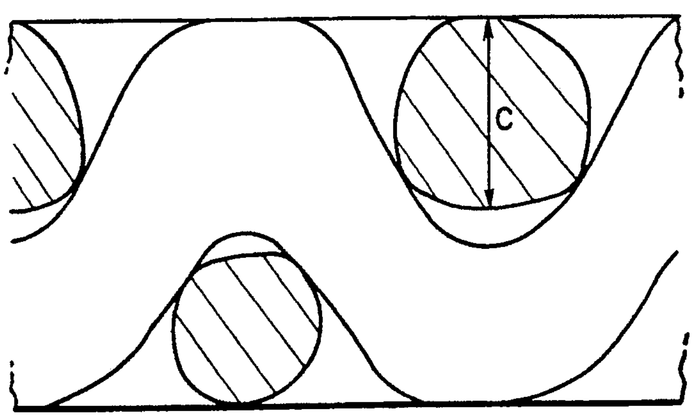

FIG. 8

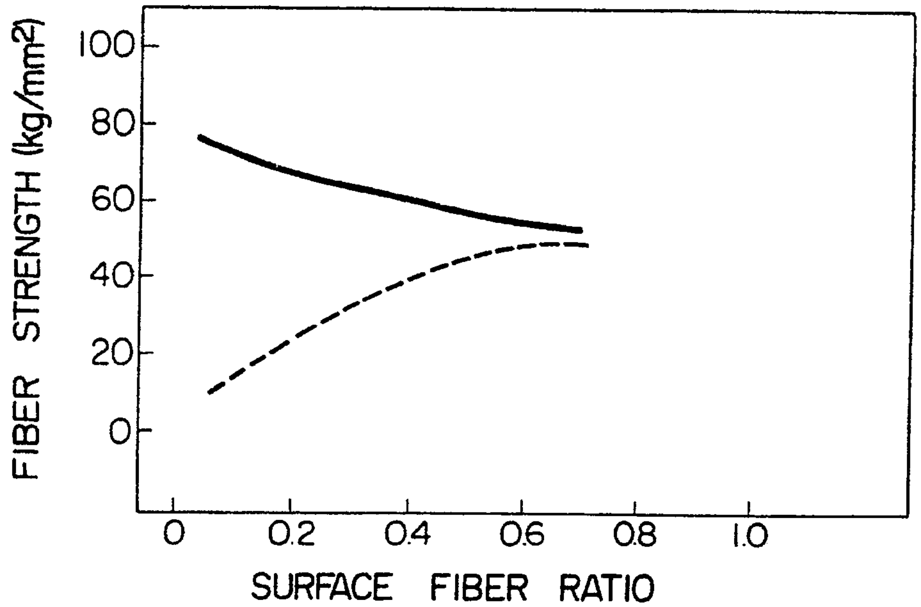
FIBER STRENGTH (kg/mm$^2$)
100
80
60
40
20
0
0
0.2
0.4
0.6
0.8
1.0
SURFACE FIBER RATIO

FIG. 9

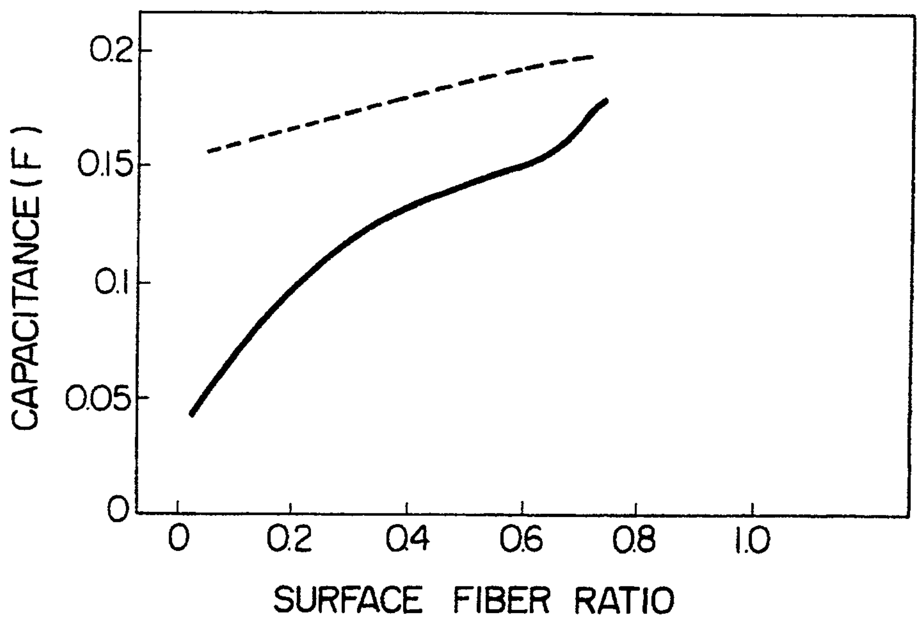
CAPACITANCE ( F )
0.2
0.15
0.1
0.05
0
0
0.2
0.4
0.6
0.8
1.0
SURFACE FIBER RATIO

FIG. 10a

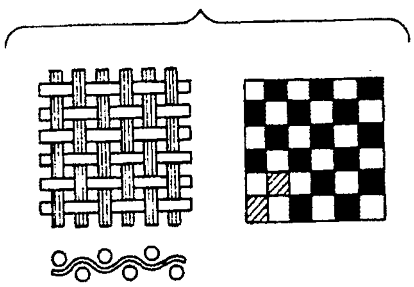

FIG. 10b

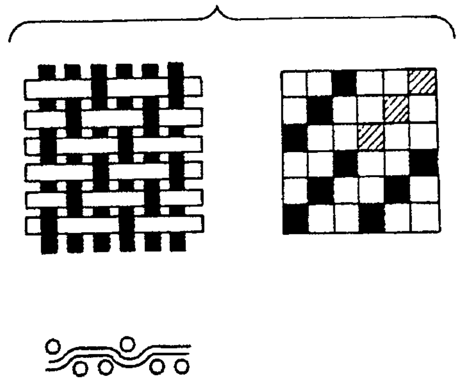

FIG. 10c

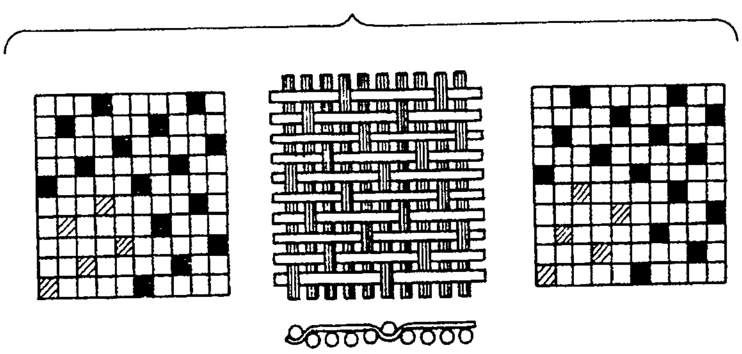

FIG. 10d

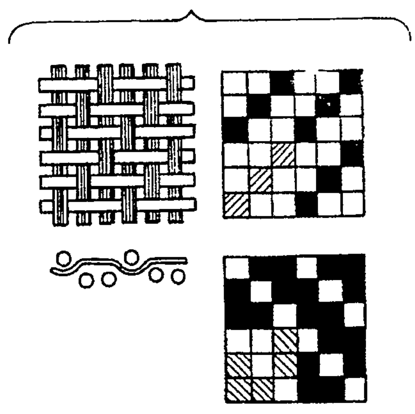

FIG. 11a

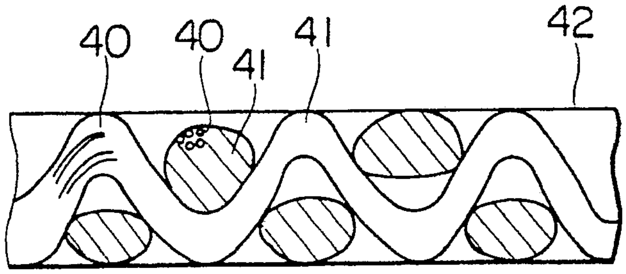


FIG. 11b

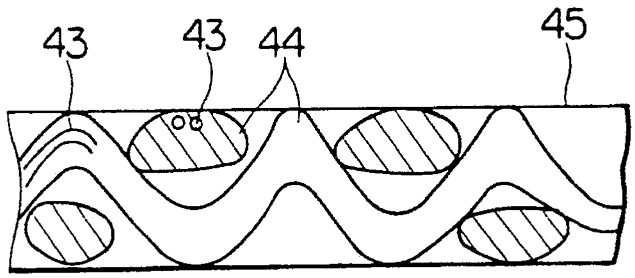


FIG. 11c

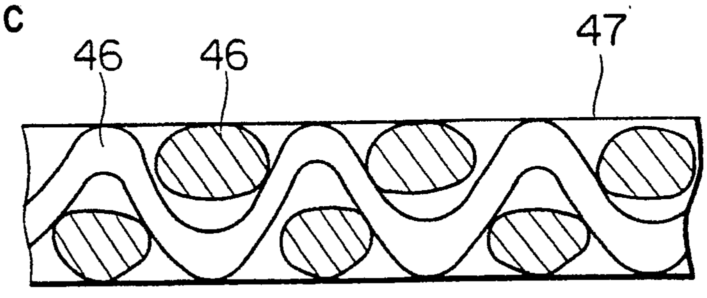

FIG. 12

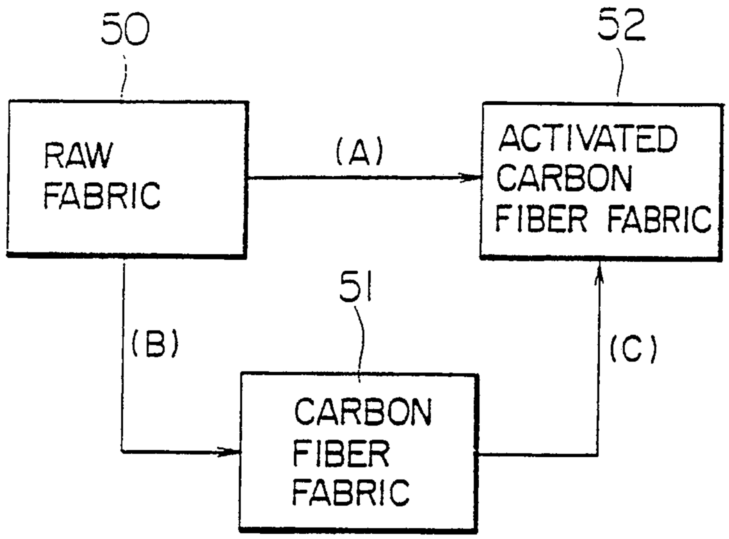
50
52
RAW FABRIC
(A)
ACTIVATED CARBON FIBER FABRIC
51
(B)
(C)
CARBON FIBER FABRIC

FIG. 13

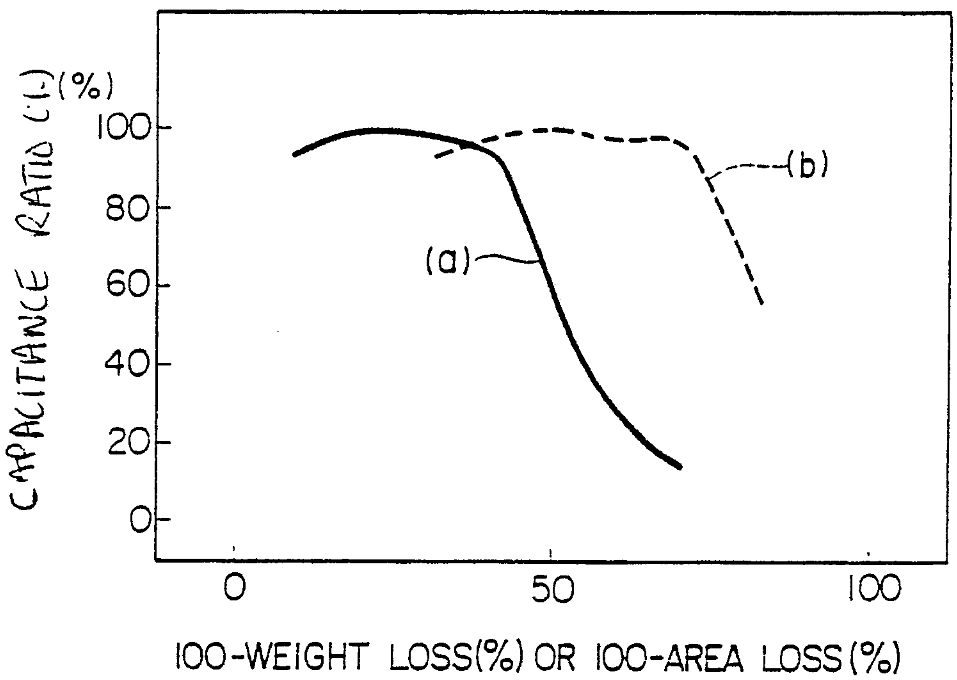
CAPACITANCE RATIO (%)
100
80
60
40
20
0
(a)
(b)
0
50
100
100-WEIGHT LOSS(%) OR 100-AREA LOSS(%)

FIG. 14

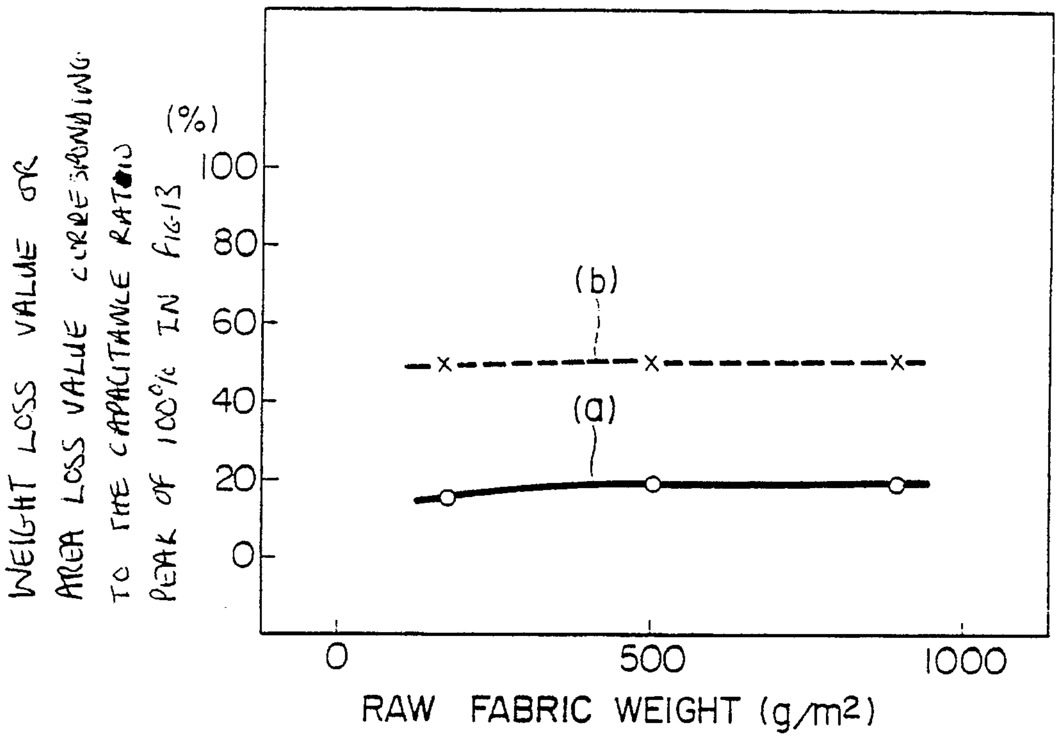
WEIGHT LOSS VALUE OR
AREA LOSS VALUE CORRESPONDING
TO THE CAPACITANCE RATIO
PEAK OF 100% IN FIG.13
(%)
100
80
60
40
20
0
(b)
(a)
0
500
1000
RAW FABRIC WEIGHT (g/m2)

FIG. 15

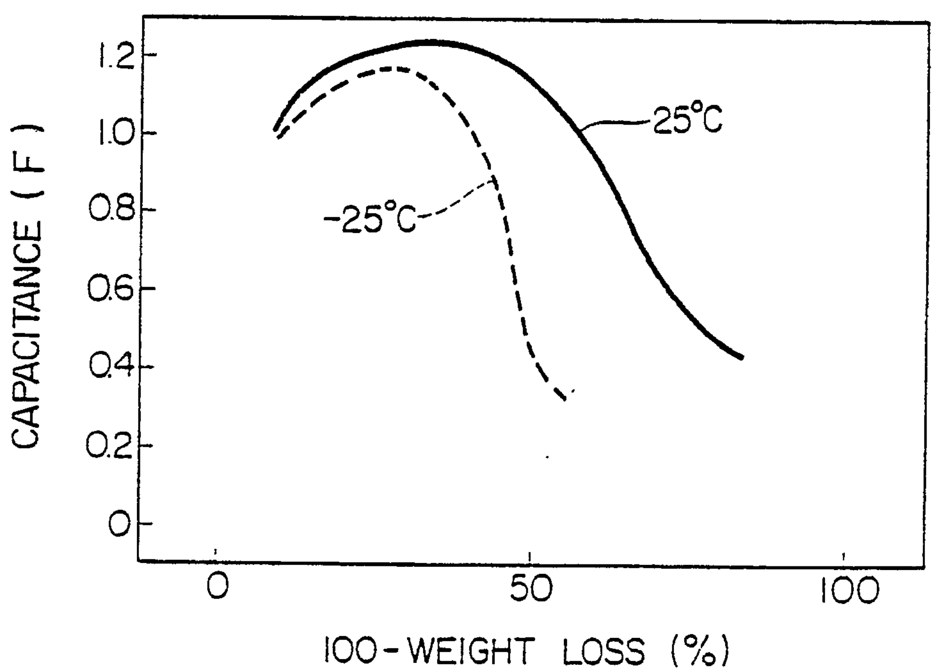
CAPACITANCE ( F )
1.2
1.0
0.8
0.6
0.4
0.2
0
25°C
-25°C
0
50
100
100-WEIGHT LOSS (%)

FIG. 16

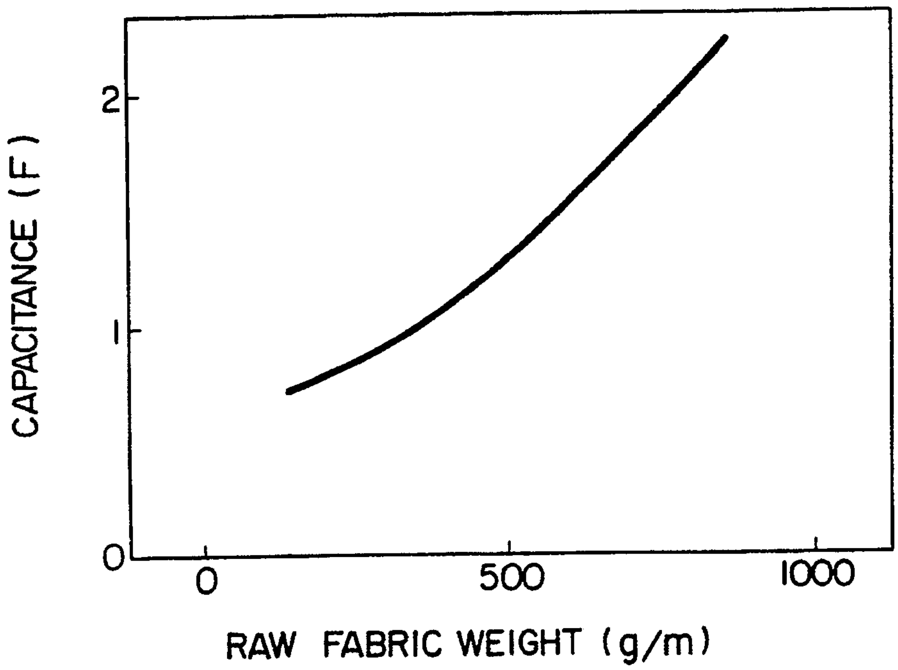
CAPACITANCE ( F )
2
1
0
0
500
1000
RAW FABRIC WEIGHT ( g/m )

FIG. 17

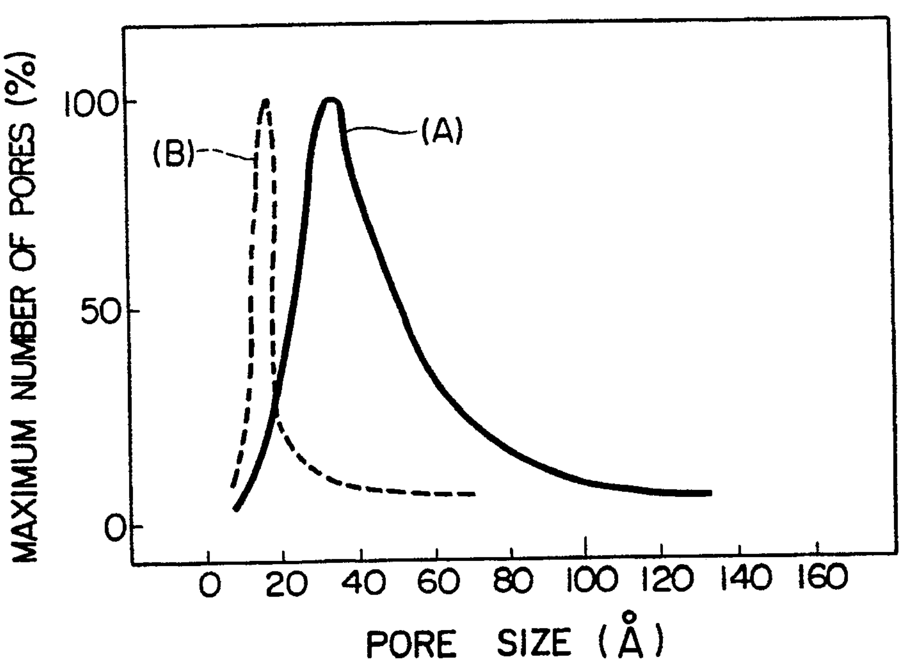
MAXIMUM NUMBER OF PORES (%)
100
50
0
(B)
(A)
0
20
40
60
80
100
120
140
160
PORE SIZE ( Å )

FIG. 18

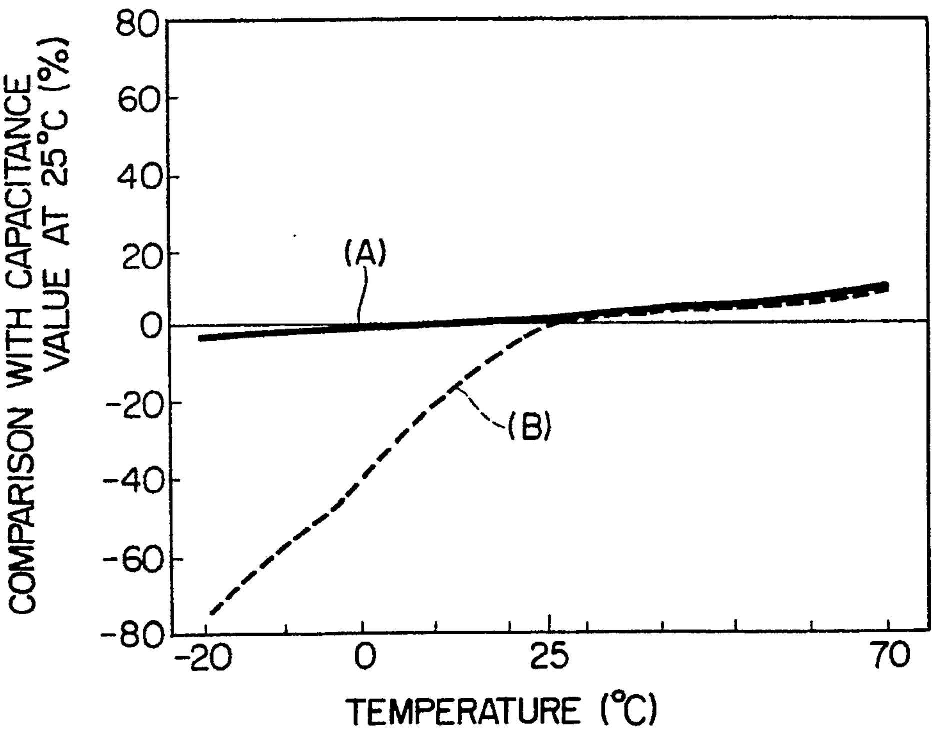


FIG. 19a

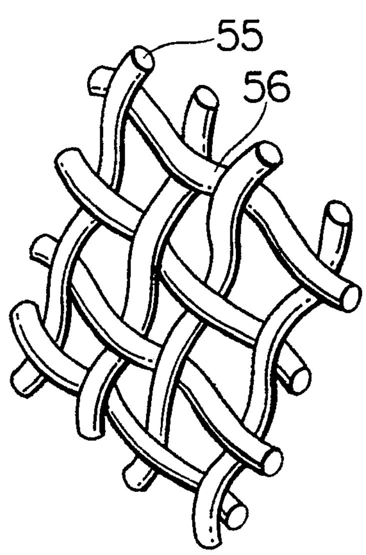


FIG. 19b FIG. 19c

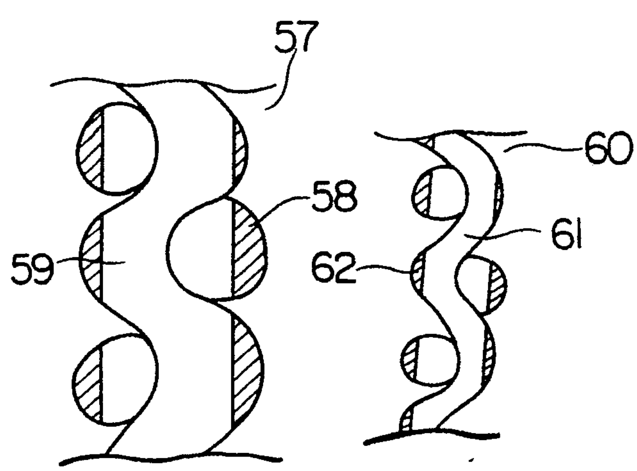

FIG. 20a FIG. 20b FIG. 20c

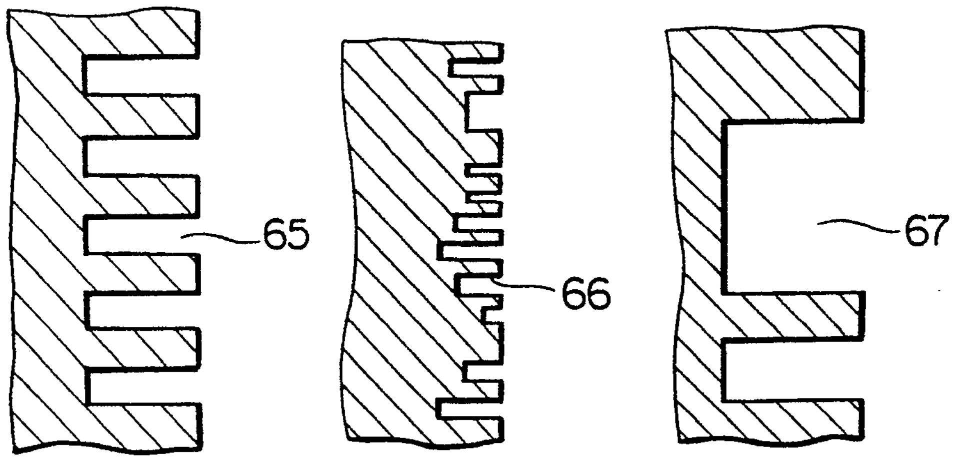


FIG. 21

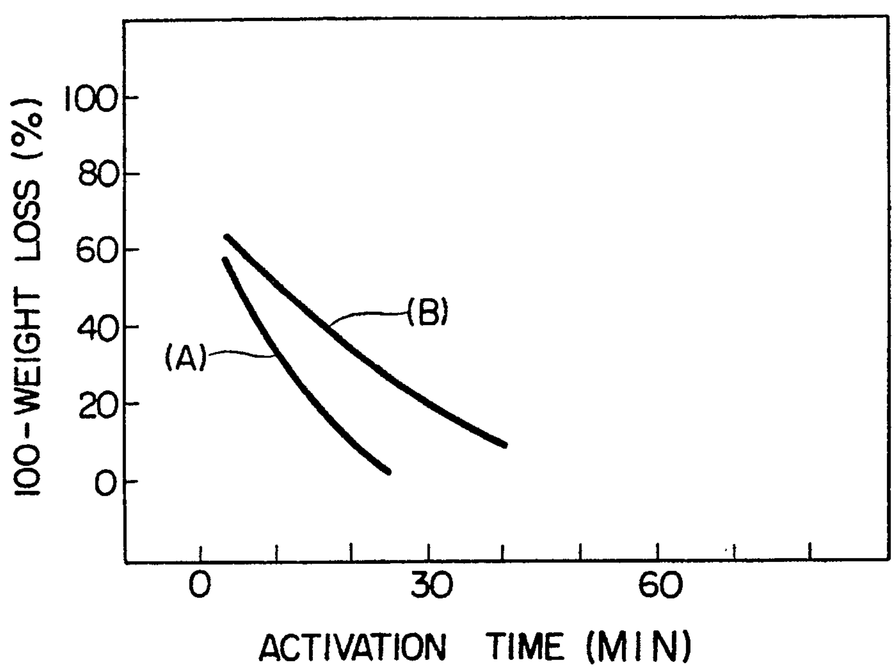

FIG. 22

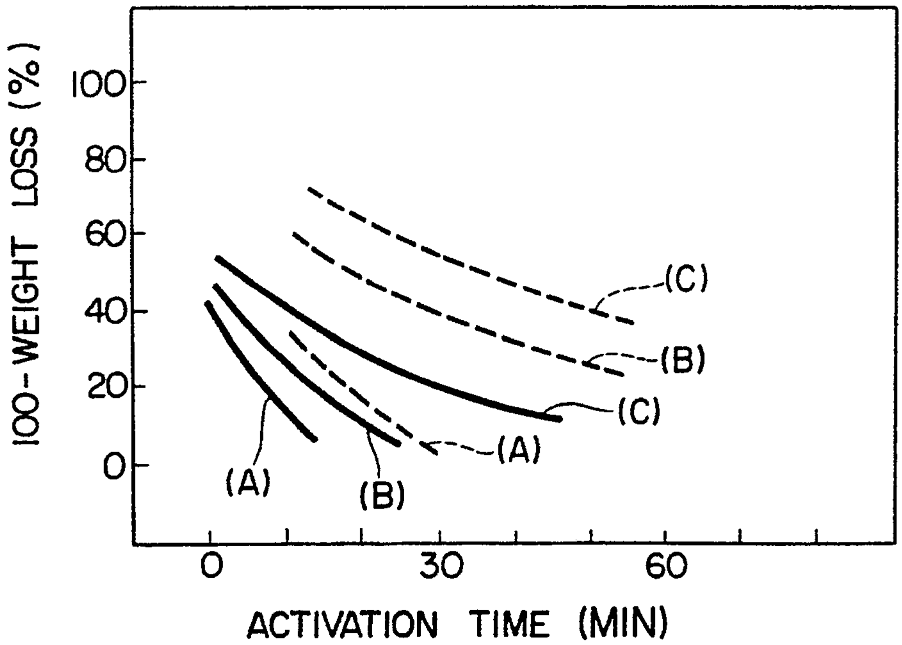
100-WEIGHT LOSS (%)
100
80
60
40
20
0
(A)
(B)
(C)
(A)
(B)
(C)
0
30
60
ACTIVATION TIME (MIN)

FIG. 23

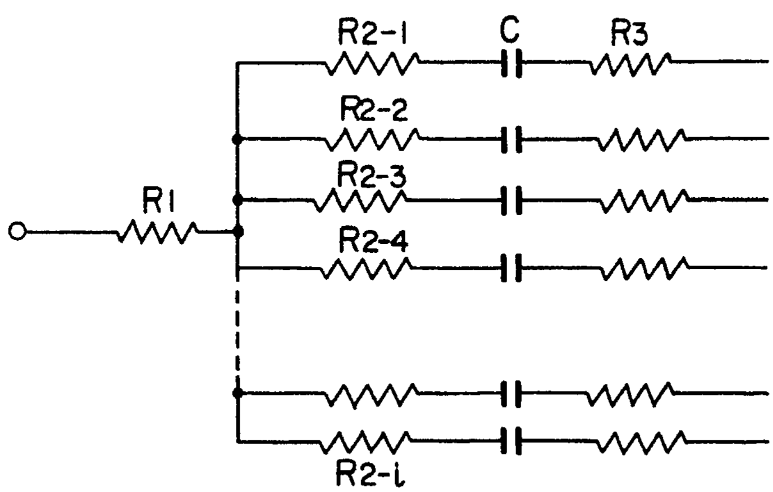
R2-1
C
R3
R2-2
R2-3
R1
R2-4
R2-i

FIG. 24a

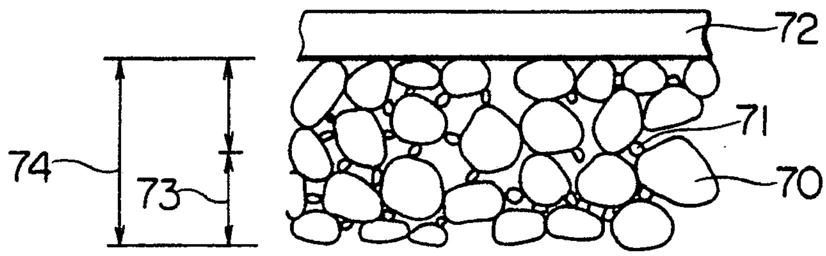


FIG. 24b

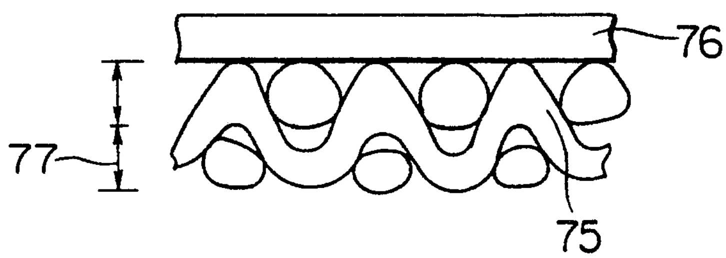


FIG. 25a

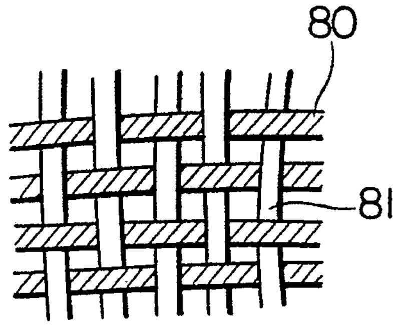


FIG. 25b

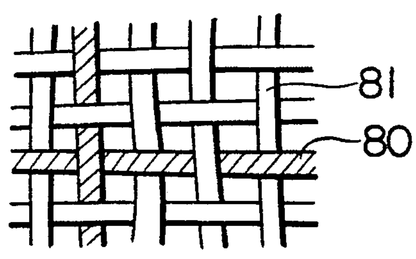

FIG. 25c

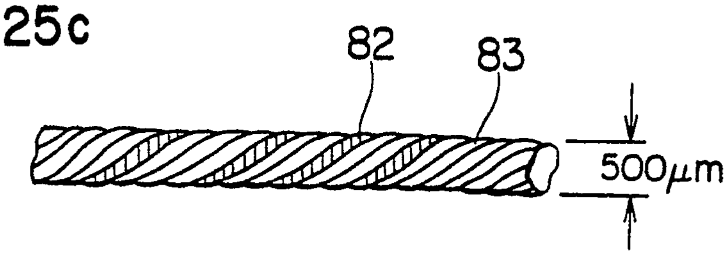


FIG. 25d

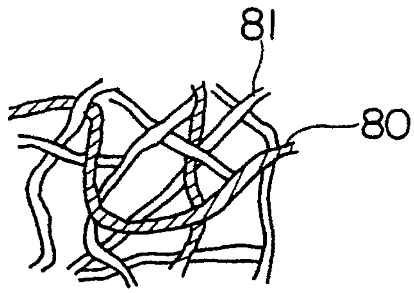


FIG. 25e

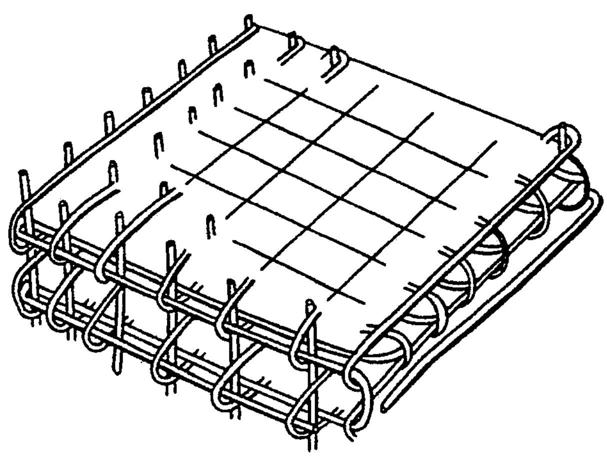

FIG. 26

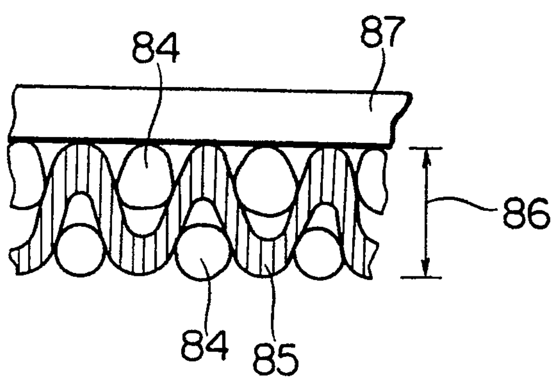

FIG. 27

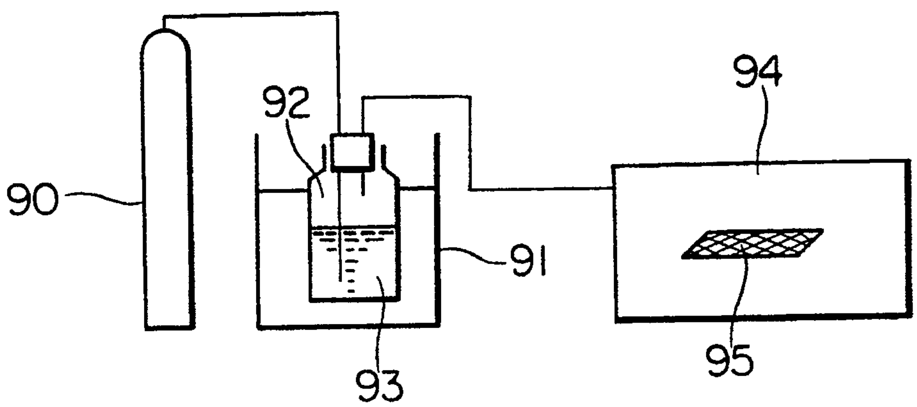
90
91
92
93
94
95

FIG. 28

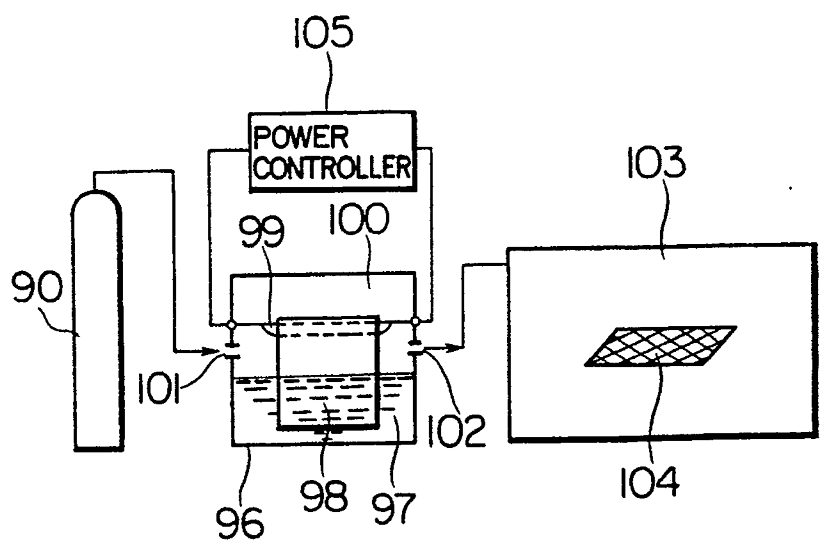
105
POWER CONTROLLER
103
99
100
90
101
102
96
98
97
104

FIG. 29

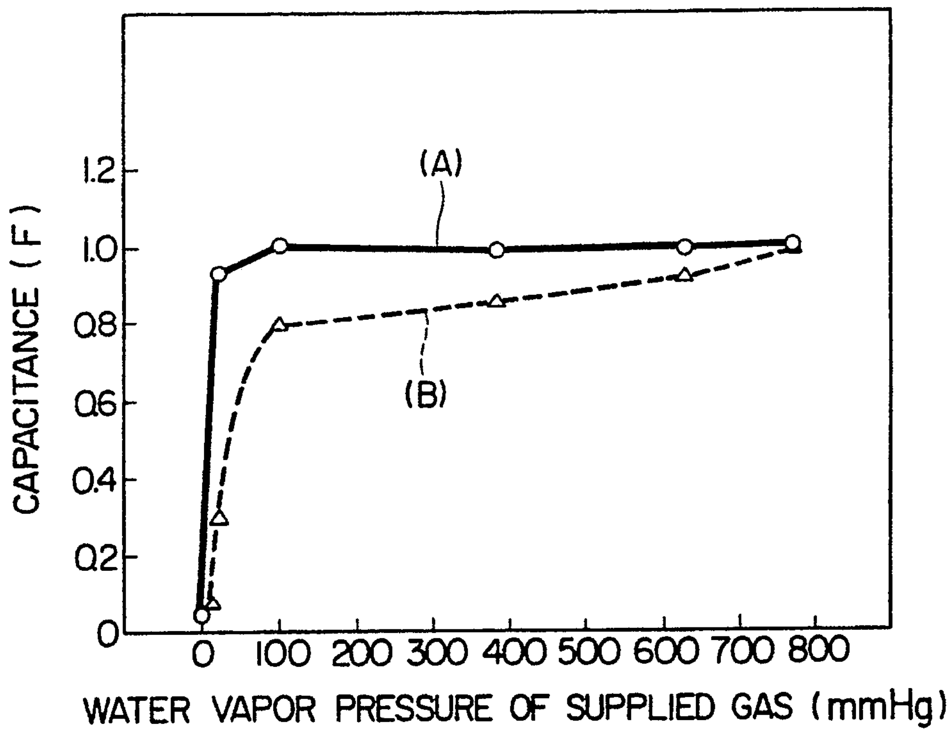
CAPACITANCE ( F )
1.2
1.0
0.8
0.6
0.4
0.2
0
(A)
(B)
0
100
200
300
400
500
600
700
800
WATER VAPOR PRESSURE OF SUPPLIED GAS (mmHg)

FIG. 30

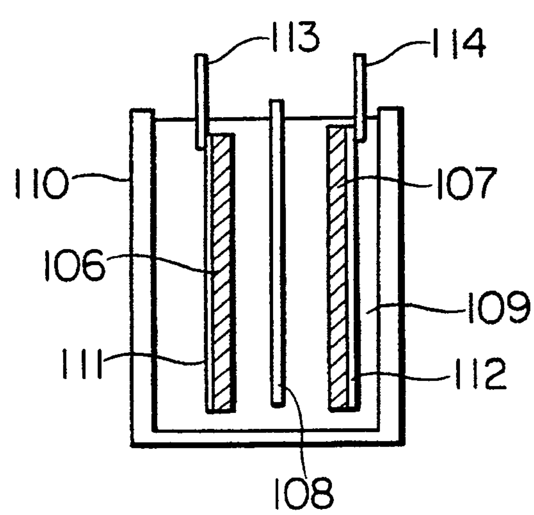
113
114
110
107
106
109
111
112
108